# EUROPEAN PATENT SPECIFICATION

(11) **EP 4 535 833 B1**
(45) Date of publication and mention of the grant of the patent: **16.09.2026**
(21) Application number: 23826271.1
(22) Date of filing: 15.06.2023
(51) Int. Cl.: H04W 4/029, H04W 52/02

(54) **COMMUNICATION METHOD AND COMMUNICATION APPARATUS**
KOMMUNIKATIONSVERFAHREN UND KOMMUNIKATIONSVORRICHTUNG
PROCÉDÉ DE COMMUNICATION ET APPAREIL DE COMMUNICATION

(30) Priority: 22.06.2022 CN 202210711258
(43) Date of publication of application: 09.04.2025
(73) Proprietor: Huawei Technologies Co., Ltd., Shenzhen, Guangdong 518129 (CN)
(72) Inventor: HAO, Jinping, Shenzhen, Guangdong 518129 (CN)
(74) Representative: Pfenning, Meinig & Partner mbB
(86) International application number: PCT/CN2023/100476
(87) International publication number: WO 2023/246622

(56) References cited:
- WO-A1-2022/028518
- WO-A1-2022/109864
- WO-A1-2022/116157
- CN-A- 109 041 098
- CN-A- 113 678 424
- CN-A- 114 007 181
- US-A1- 2022 124 672
- HUAWEI, HISILICON: "Deletion of AN tunnel info from Handover Notify message in the EPS-to-5GS handover procedure", 3GPP TSG-SA2 MEETING #128BIS, S2-1812192, 20 November 2018 (2018-11-20), XP051490406

## Description

### TECHNICAL FIELD

This application relates to the field of communication technologies, and in particular, to a communication method and a communication apparatus.

### BACKGROUND

Currently, a positioning function is an important function of 5th generation (5th generation, 5G) wireless communication new radio (new radio, NR). In a process of positioning a terminal device, how to reduce power consumption of the terminal device and implement low-power positioning on the terminal device is a problem worth considering. The following documents provide background teaching on idle states of terminal for the purpose of saving power:
WO 2022/116157 A1 (NOKIA SHANGHAI BELL CO LTD [CN] ET AL.) 9 June 2022;
US 2022/124672 A1 (XU HUILIN [US] ET AL) 21 April 2022;
WO 2022/028518 A1 (MEDIATEK INC [CN]) 10 February 2022.

### SUMMARY

The invention is defined in the appended independent claims. Embodiments representing specific realisations of the invention are defined in the appended dependent claims.

This application provides a communication method and a communication apparatus, to reduce power consumption of a terminal device and implement low-power positioning on the terminal device.

A first aspect of this application provides a communication method, including:
A terminal device receives first information from an access network device, where the first information is for configuring the terminal device to enter a first mode, and the first information is carried in a radio resource control (radio resource control, RRC) release message or an RRC reconfiguration message. Then, the terminal device enters the first mode based on the first information. When the terminal device is in the first mode, the terminal device does not perform at least one of the following: The terminal device monitors a paging message; the terminal device searches for at least one of the following: a synchronization signal block (synchronization signal block, SSB) or a system information block (system information block, SIB1) message; or the terminal device measures an SSB. When the terminal device is in the first mode, the terminal device performs at least one of the following: The terminal device sends a sounding reference signal (sounding reference signal, SRS); or the terminal device measures a positioning reference signal (positioning reference signal, PRS).

In the foregoing technical solution, the terminal device may receive the first information sent by the access network device, where the first information is for configuring the terminal device to enter the first mode. In this way, the terminal device can enter the first mode based on the first information. It may be understood that the first mode may be a mode (mode) or a sub-state (sub_state) of the terminal device in an RRC inactive state or an RRC idle state, or a 4^{th} state other than three RRC states of the terminal device. The first mode may also be referred to as a power-saving mode, a power-saving mode (power-saving mode, PSM), a low-power mode (low-power mode), an ultra-low-power mode, a power-saving state, a power-saving state (power-saving state), the power-saving state, a low-power state, an ultra-low-power state, or the like. A name of the first mode is not specifically limited in this application. When the terminal device is in the first mode, the terminal device does not perform a corresponding operation. It can be learned that, when management and control of a network on the terminal device are ensured, that the terminal device enters the first mode helps reduce power consumption of the terminal device and improve a battery life of the terminal device. Further, when the terminal device is in the first mode, the terminal device may perform at least one of the following: The terminal device sends the SRS; or the terminal device measures the PRS, to implement low-power positioning on the terminal device. In addition, the first information is carried in the RRC release message, and the RRC release message may be for releasing the terminal device to the RRC inactive state or the RRC idle state. When the terminal device is in the RRC inactive state or the RRC idle state, the power consumption is lower. In addition, when the terminal device is in the RRC inactive state or the RRC idle state, the terminal device may enter the first mode, and the terminal device does not need to be frequently woken up to monitor the paging message or measure a signal, to avoid a waste of the power of the terminal device. Therefore, the power consumption of the terminal device is further reduced. The terminal device sends the SRS or measures the PRS in the first mode, to implement the low-power positioning on the terminal device.

In a possible implementation, the first information is for configuring the terminal device to enter the first mode when the terminal device is in an RRC inactive state, and that the terminal device enters the first mode based on the first information includes: The terminal device enters the first mode when the terminal device is in the RRC inactive state.

Alternatively, the first information is for configuring the terminal device to enter the first mode when the terminal device is in an RRC idle state, and that the terminal device enters the first mode based on the first information includes: The terminal device enters the first mode when the terminal device is in the RRC idle state.

In this implementation, when the terminal device is in the RRC inactive state or the RRC idle state, the terminal device may enter the first mode. First, when the terminal device is in the RRC inactive state or the RRC idle state, the power consumption is lower. The access network device enables, through the configuration of the first information, the terminal device to not need, when the terminal device is in the RRC inactive state or the RRC idle state, to be frequently woken up to monitor the paging message or measure the signal, to avoid a waste of the power of the terminal device. The terminal device sends the SRS or measures the PRS in the first mode, to implement the low-power positioning on the terminal device.

In another possible implementation, the first information includes at least one of the following: first indication information, waiting duration for the terminal device to enter the first mode, an entry time point or a triggering event for entering the first mode, or an exit time point or a triggering event for the terminal device to exit from the first mode, where the first indication information indicates the terminal device to enter the first mode.

In this implementation, some possible content included in the first information is shown. In a possible implementation, the access network device may directly indicate, by using the first indication information, the terminal device to enter the first mode. On this basis, some related configurations (for example, the waiting duration, the entry time point, the exit time point) for the terminal device to enter the first mode may be further delivered, so that the solution is more comprehensive, and the terminal device enters the first mode and exits from the first mode at appropriate time points. This reduces the power consumption of the terminal device and implements the low-power positioning on the terminal device while ensuring the management of the network on the terminal device. In another possible implementation, the access network device may indirectly indicate, by using some related configurations (for example, the waiting duration, the entry time point, or the exit time point) of the first mode, the terminal device to enter the first mode.

In another possible implementation, the method further includes:
The terminal device sends a first request or capability information to the access network device, an access and mobility management function (access and mobility management function, AMF), or a location management device, where the first request is for requesting to configure the terminal device to enter the first mode, and the capability information includes information indicating that the terminal device supports the first mode.

In this implementation, the terminal device may actively request to enter the first mode, or actively report the capability information indicating that the terminal device supports the first mode, so that the network configures the terminal device to enter the first mode, to reduce the power consumption of the terminal device, thereby implementing the low-power positioning on the terminal device.

In another possible implementation, the method further includes:
The terminal device sends any one of the following to the access network device: second information, an RRC resume request message, or an RRC setup request message, where the second information indicates that the terminal device exits from the first mode, and the RRC resume request message or the RRC setup request message indicates that the terminal device exits from the first mode.

In this implementation, the terminal device may indicate, to the access network device, that the terminal device exits from the first mode, so that the terminal device exits from the first mode in time. This ensures a normal service requirement of the terminal device, and enables the solution to be more reasonable and practical. In the two possible indication manners provided above, specifically, the second information may directly indicate that the terminal device exits from the first mode, or an RRC message may indicate that the terminal device exits from the first mode. The solution is more diversified, which facilitates implementation of the solution.

In another possible implementation, the second information is carried in the RRC resume request message, or the second information is carried in the RRC setup request message.

In this implementation, a transmission manner of the second information is provided, to facilitate implementation of the solution. The second information may be carried in an existing message, and there is no need to redefine a new message. This facilitates implementation of the solution, and improves feasibility of the solution. In addition, when the terminal device is in the RRC inactive state or the RRC idle state, the terminal device enters the first mode. When the terminal device requests to exit from the first mode, the terminal device may request to enter an RRC connected state. Therefore, the terminal device may request, by using the RRC resume request message or the RRC setup request message, to enter the RRC connected state, and indicate, by using the RRC resume request message or the RRC setup request message, that the terminal device exits from the first mode.

A second aspect of this application provides a communication method, including:
An access network device determines first information, where the first information is for configuring a terminal device to enter a first mode. The access network device sends the first information to the terminal device, where the first information is carried in an RRC release message or an RRC reconfiguration message. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In the foregoing technical solution, the access network device sends the first information to the terminal device, where the first information is for configuring the terminal device to enter the first mode, so that the terminal device enters the first mode based on the first information. When the terminal device is in the first mode, the terminal device does not perform a corresponding operation. It can be learned that, when management and control of a network on the terminal device are ensured, that the terminal device enters the first mode helps reduce power consumption of the terminal device and improve a battery life of the terminal device. Further, when the terminal device is in the first mode, the terminal device may perform at least one of the following: The terminal device sends the SRS; or the terminal device measures the PRS, to implement low-power positioning on the terminal device. In addition, the first information is carried in the RRC release message, and the RRC release message may be for releasing the terminal device to an RRC inactive state or an RRC idle state. When the terminal device is in the RRC inactive state or the RRC idle state, the power consumption is lower. In addition, when the terminal device is in the RRC inactive state or the RRC idle state, the terminal device may enter the first mode, and the terminal device does not need to be frequently woken up to monitor the paging message or measure a signal, to avoid a waste of the power of the terminal device. Therefore, the power consumption of the terminal device is further reduced. The terminal device sends the SRS or measures the PRS in the first mode, to implement the low-power positioning on the terminal device.

In a possible implementation, the first information is for configuring the terminal device to enter the first mode when the terminal device is in an RRC inactive state; or the first information is for configuring the terminal device to enter the first mode when the terminal device is in an RRC idle state.

In this implementation, the access network device may configure, by using the first information, the terminal device to enter the first mode when the terminal device is in the RRC inactive state or the RRC idle state. First, when the terminal device is in the RRC inactive state or the RRC idle state, the power consumption is lower. The access network device enables, through the configuration of the first information, the terminal device to not need, when the terminal device is in the RRC inactive state or the RRC idle state, to be frequently woken up to monitor the paging message or measure the signal, to avoid a waste of the power of the terminal device. The terminal device sends the SRS or measures the PRS in the first mode, to implement the low-power positioning on the terminal device.

In another possible implementation, the first information includes at least one of the following: first indication information, waiting duration, an entry time point, or a triggering event for the terminal device to enter the first mode, or an exit time point or a triggering event for the terminal device to exit from the first mode, where the first indication information indicates the terminal device to enter the first mode.

In this implementation, some possible content included in the first information is shown. In a possible implementation, the access network device may directly indicate, by using the first indication information, the terminal device to enter the first mode. On this basis, some related configurations (for example, the waiting duration, the entry time point, the exit time point) for the terminal device to enter the first mode may be further delivered, so that the solution is more comprehensive, and the terminal device enters the first mode and exits from the first mode at appropriate time points. This reduces the power consumption of the terminal device and implements the low-power positioning on the terminal device while ensuring the management of the network on the terminal device. In another possible implementation, the access network device may indirectly indicate, by using some related configurations (for example, the waiting duration, the entry time point, or the exit time point) of the first mode, the terminal device to enter the first mode.

In another possible implementation, the method further includes:
The access network device receives a first request or capability information from the terminal device, where the first request is for requesting to configure the terminal device to enter the first mode, and the capability information includes information indicating that the terminal device supports the first mode.

In this implementation, the access network device receives the first request or the capability information actively reported by the terminal device, so that the network configures the terminal device to enter the first mode, to reduce the power consumption of the terminal device, thereby implementing the low-power positioning on the terminal device.

In another possible implementation, the method further includes:
The access network device sends a first notification to an AMF, where the first notification is for notifying the AMF that the terminal device is to enter the first mode; and/or
the access network device sends a second notification to a location management device, where the second notification is for notifying the location management device that the terminal device is to enter the first mode.

In this implementation, after the access network device configures the terminal device to enter the first mode, the access network device may notify the AMF and/or the location management device that the terminal device is to enter the first mode, so that the AMF and/or the location management device learn/learns of a status of the terminal device, to avoid a resource waste caused by paging the terminal device by the AMF and/or the location management device.

In another possible implementation, the method further includes:
The access network device receives third information from an AMF or a location management device, where the third information includes a first request or capability information, where the first request is for requesting to configure the terminal device to enter the first mode, and the capability information includes information indicating that the terminal device supports the first mode.

In this implementation, the access network device may receive the third information sent by the AMF or the location management device, so that the access network device configures the terminal device to enter the first mode, to reduce the power consumption of the terminal device, thereby implementing the low-power positioning on the terminal device. Another manner that is of triggering the access network device to configure the terminal device to enter the first mode and that is provided in this implementation improves diversity of a scenario to which the solution is applicable.

In another possible implementation, the third information further includes at least one of the following: waiting duration, an entry time point, or a triggering event for the terminal device to enter the first mode, or an exit time point or a triggering event for the terminal device to exit from the first mode.

In this implementation, the third information further includes configuration information for the terminal device to enter the first mode and configuration information for the terminal device to exit from the first mode. In this way, the terminal device enters the first mode and exits from the first mode at the appropriate time points. This reduces the power consumption of the terminal device and implements the low-power positioning on the terminal device while ensuring the management of the network on the terminal device.

In another possible implementation, the method further includes:
The access network device sends a first response to the AMF, where the first response is for confirming that the terminal device is to enter the first mode; and/or the access network device sends a second response to the location management device, where the second response is for confirming that the terminal device is to enter the first mode.

In this implementation, the access network device may send a corresponding response message to the AMF, and/or send a corresponding response message to the location management device, to notify or indicate that the terminal device is to enter the first mode, so that the AMF and/or the location management device learn/learns of a status of the terminal device, to avoid a resource waste caused by paging the terminal device by the AMF and/or the location management device via the access network device.

In another possible implementation, the method further includes:
The access network device receives second information, an RRC resume request message, or an RRC setup request message from the terminal device, where the second information indicates that the terminal device exits from the first mode, and the RRC resume request message or the RRC setup request message indicates that the terminal device exits from the first mode.

In this implementation, the access network device receives, from the terminal device, an indication for exiting from the first mode, so that the terminal device exits from the first mode in time. This ensures a normal service requirement of the terminal device, and enables the solution to be more reasonable and practical. In the two possible indication manners provided above, specifically, the second information may indicate that the terminal device exits from the first mode, or an RRC message may indicate that the terminal device exits from the first mode. The solution is more diversified, which facilitates implementation of the solution.

In another possible implementation, the second information is carried in the RRC resume request message, or the second information is carried in the RRC setup request message.

In this implementation, a transmission manner of the second information is provided, to facilitate implementation of the solution. The second information may be carried in an existing message, and there is no need to redefine a new message. This facilitates implementation of the solution, and improves feasibility of the solution.

In another possible implementation, the method further includes:
The access network device sends a third notification to the AMF, where the third notification is for notifying the AMF that the terminal device exits from the first mode; and/or the access network device sends a fourth notification to the location management device, where the fourth notification is for notifying the location management device that the terminal device exits from the first mode.

In this implementation, the access network device may notify the AMF and/or the location management device that the terminal device exits from the first mode, so that the AMF and/or the location management device learn/learns of the status of the terminal device. This helps the AMF and/or the location management device perform communication transmission with the terminal device within a reasonable time range. For example, the AMF may page the terminal device via the access network device after the time point at which the terminal device exits from the first mode. The resource waste is avoided.

A third aspect of this application provides a communication method, including:
A location management device receives a second notification from an access network device, where the second notification is for notifying the location management device that a terminal device is to enter a first mode. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In the foregoing technical solution, the location management device may receive the second notification from the access network device, so that the location management device determines a status of the terminal device. This helps the location management device perform communication transmission with the terminal device within a reasonable time range. For example, the location management device may not page the terminal device via the access network device in a time period in which the terminal device is in the first mode. A resource waste is avoided.

In a possible implementation, the method further includes:
The location management device receives a fourth notification from the access network device, where the fourth notification is for notifying that the terminal device exits from the first mode.

In this implementation, the location management device may receive the fourth notification, to determine that the terminal device exits from the first mode, so that the location management device performs communication transmission with the terminal device within the reasonable time range. For example, the location management device may page the terminal device via the access network device after a time point at which the terminal device exits from the first mode. The resource waste is avoided.

In another possible implementation, the second notification is carried in a position information update message.

In this implementation, a carrier of the second notification is provided, to facilitate implementation of the solution. Further, the second notification may be carried in an existing message, and there is no need to define a new message, so that feasibility of the solution is improved.

A fourth aspect of this application provides a communication method, including:
An AMF receives a first notification from an access network device, where the first notification is for notifying the AMF that a terminal device is to enter a first mode. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In the foregoing technical solution, the AMF receives the first notification from the access network device, so that the AMF determines a status of the terminal device. This helps the AMF perform communication transmission with the terminal device within a reasonable time range. For example, the AMF may not page the terminal device via the access network device in a time period in which the terminal device is in the first mode. A resource waste is avoided.

In a possible implementation, the method further includes:
The AMF receives a third notification from the access network device, where the third notification is for notifying that the terminal device exits from the first mode.

In this implementation, the AMF receives the third notification from the access network device, to determine that the terminal device exits from the first mode, so that the AMF performs communication transmission with the terminal device within the reasonable time range. For example, the AMF may page the terminal device via the access network device after a time point at which the terminal device exits from the first mode. The resource waste is avoided.

A fifth aspect of this application provides a communication method, including:
A location management device sends third information to an access network device or an AMF, where the third information includes a first request or capability information, where the first request is for requesting to configure a terminal device to enter a first mode, and the capability information includes information indicating that the terminal device supports the first mode. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In the foregoing technical solution, the location management device may send the third information to the access network device or the AMF, where the third information includes the first request or the capability information, and the first request is for requesting to configure the terminal device to enter the first mode, so that the AMF requests the access network device to configure the terminal device to enter the first mode, or the access network device configures the terminal device to enter the first mode. In addition, when the terminal device is in the first mode, the terminal device does not perform a corresponding operation. It can be learned that, when management and control of a network on the terminal device are ensured, that the terminal device enters the first mode helps reduce power consumption of the terminal device and improve a battery life of the terminal device. Further, when the terminal device is in the first mode, the terminal device may perform at least one of the following: The terminal device sends the SRS; or the terminal device measures the PRS, to implement low-power positioning on the terminal device.

In a possible implementation, the third information further includes at least one of the following: waiting duration, an entry time point, or a triggering event for the terminal device to enter the first mode, or an exit time point or a triggering event for the terminal device to exit from the first mode.

In this implementation, the third information further includes configuration information for the terminal device to enter the first mode and configuration information for the terminal device to exit from the first mode. In this way, the solution is more comprehensive, so that the terminal device enters the first mode and exits from the first mode at appropriate time points. This reduces the power consumption of the terminal device and implements the low-power positioning on the terminal device while ensuring the management of the network on the terminal device.

In another possible implementation, the method further includes:
The location management device receives the first request or the capability information from the terminal device.

In this implementation, the location management device may receive the first request or the capability information from the terminal device, so that the location management device is triggered to request the AMF or the access network device to configure the terminal device to enter the first mode, to reduce the power consumption of the terminal device, and implement the low-power positioning on the terminal device.

In another possible implementation, before the location management device sends the third information to the access network device, the method further includes:
The location management device sends a second request to the AMF, where the second request is for requesting to allow the terminal device to enter the first mode.

The location management device receives a confirmation message from the AMF, where the confirmation message is for confirming that the terminal device is allowed to enter the first mode.

In this implementation, before sending the third information to the access network device, the location management device may first ask for instructions from the AMF on whether the terminal device is allowed to enter the first mode, so that the terminal device is reasonably configured to enter the first mode, to avoid a case in which when the AMF needs to perform service communication transmission with the terminal device, the location management device requests the access network device to configure the terminal device to enter the first mode, and ensure normal service running of the terminal device.

In another possible implementation, the method further includes:
The location management device receives a second notification or a second response from the access network device, where the second notification is for notifying the location management device that the terminal device is to enter the first mode, and the second response is for confirming that the terminal device is to enter the first mode.

In this implementation, the location management device may receive the second notification or the second response, so that the location management device learns that the terminal device is to enter the first mode, to avoid a case in which the location management device pages the terminal device via the access network device when the terminal device is in the first mode, and avoid a network resource waste.

In another possible implementation, the second notification or the second response is carried in a position information response message or a position information update message.

In the foregoing implementation, a carrier of the second notification or the second response is provided, to facilitate implementation of the solution. Further, the second notification or the second response may be carried in an existing message, and there is no need to define a new message, to facilitate feasibility of the solution.

In another possible implementation, the method further includes:
The location management device receives a fourth notification from the access network device, where the fourth notification is for notifying that the terminal device exits from the first mode.

In this implementation, the location management device receives the fourth notification, to determine that the terminal device exits from the first mode. In this way, the location management device can perform communication transmission with the terminal device in an appropriate time period, to improve communication transmission efficiency, and avoid the network resource waste.

In another possible implementation, the fourth notification is carried in the position information update message.

In the foregoing implementation, a carrier of the fourth notification is provided, to facilitate implementation of the solution. Further, the fourth notification may be carried in the existing message, and there is no need to define the new message, to facilitate the feasibility of the solution.

In another possible implementation, that the location management device sends the third information to the access network device includes:
The location management device sends a position information request message to the access network device, where the position information request message includes the third information.

In this implementation, the location management device may deliver the third information in a process of requesting the access network device to position the terminal device, to implement procedure reuse. The third information does not need to be delivered via a new message, so that the solution is more feasible.

A sixth aspect of this application provides a communication method, including:
An AMF sends third information to an access network device, where the third information includes a first request or capability information, where the first request is for requesting to configure a terminal device to enter a first mode, and the capability information includes information indicating that the terminal device supports the first mode. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In the foregoing technical solution, the AMF sends the third information to the access network device, so that the access network device configures the terminal device to enter the first mode. In addition, when the terminal device is in the first mode, the terminal device does not perform a corresponding operation. It can be learned that, when management and control of a network on the terminal device are ensured, that the terminal device enters the first mode helps reduce power consumption of the terminal device and improve a battery life of the terminal device. Further, when the terminal device is in the first mode, the terminal device may perform at least one of the following: The terminal device sends the SRS; or the terminal device measures the PRS, to implement low-power positioning on the terminal device.

In a possible implementation, before the AMF sends the third information to the access network device, the method further includes:
The AMF receives the third information from a location management device, where the third information includes the first request or the capability information, where the first request is for requesting to configure the terminal device to enter the first mode, and the capability information includes the information indicating that the terminal device supports the first mode.

In this implementation, the AMF may receive the third information from the location management device, to trigger the AMF to indicate the access network device to configure the terminal device to enter the first mode, thereby implementing the low-power positioning on the terminal device.

In another possible implementation, before the AMF sends the third information to the access network device, the method further includes:
The AMF receives the first request or the capability information from the terminal device, where the first request is for requesting to configure the terminal device to enter the first mode, and the capability information includes the information indicating that the terminal device supports the first mode.

In this implementation, the AMF may receive the first request or the capability information from the terminal device, to trigger the AMF to indicate the access network device to configure the terminal device to enter the first mode, thereby implementing the low-power positioning on the terminal device.

In another possible implementation, the method further includes:
The AMF receives a first notification or a first response from the access network device, where the first notification is for notifying the AMF that the terminal device is to enter the first mode, and the first response is for confirming that the terminal device is to enter the first mode.

In this implementation, the AMF may receive the first notification or the first response from the access network device, to determine that the terminal device is to enter the first mode, so that the AMF performs communication transmission with the terminal device in an appropriate time period. For example, the AMF does not page the terminal device via the access network device in a time period in which the terminal device is in the first mode, to avoid a network resource waste.

In another possible implementation, the method further includes:
The AMF receives a third notification from the access network device, where the third notification is for notifying the AMF that the terminal device exits from the first mode.

In this implementation, the AMF receives the third notification, to determine that the terminal device exits from the first mode. In this way, the AMF can perform communication transmission with the terminal device in the appropriate time period, to improve communication transmission efficiency, and avoid the network resource waste.

A seventh aspect of this application provides a communication method, including:
An AMF receives a second request from a location management device, where the second request is for requesting the AMF to allow a terminal device to enter a first mode. The AMF sends a confirmation message to the location management device, where the confirmation message is for confirming that the terminal device is allowed to enter the first mode. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In this implementation, the location management device may first ask for instructions from the AMF on whether the terminal device is allowed to enter the first mode, After the AMF allows the terminal device to enter the first mode, an access network device reasonably configures the terminal device to enter the first mode, to avoid a case in which when the AMF needs to perform service communication transmission with the terminal device, the location management device requests the access network device to configure the terminal device to enter the first mode, and reduce power consumption of the terminal device and implement low-power positioning on the terminal device while ensuring normal service running of the terminal device.

In a possible implementation, the method further includes:
The AMF receives a first notification from an access network device, where the first notification is for notifying the AMF that the terminal device is to enter the first mode.

In this implementation, after the access network device configures the terminal device to enter the first mode, the AMF receives the first notification from the access network device, so that the AMF learns of a status of the terminal device, to avoid a network resource waste caused by paging the terminal device by the AMF.

In another possible implementation, the method further includes:
The AMF receives a third notification from the access network device, where the third notification is for notifying the AMF that the terminal device exits from the first mode.

In this implementation, the AMF receives the third notification from the access network device, so that the AMF learns of the status of the terminal device. This helps the AMF perform communication transmission with the terminal device within a reasonable time range. For example, the AMF may page the terminal device via the access network device after a time point at which the terminal device exits from the first mode. The network resource waste is avoided.

An eighth aspect of this application provides a communication method, including:
A terminal device sends a first request to a network device, where the first request is used by the terminal device to request to enter a first mode. The terminal device receives first confirmation from the network device, where the first confirmation is for confirming that the terminal device is allowed to enter the first mode. The terminal device enters the first mode based on the first confirmation. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In the foregoing technical solution, the terminal device sends the first request to the network device, where the first request is used by the terminal device to request to enter the first mode. The terminal device receives the first confirmation from the network device, where the first confirmation is for confirming that the terminal device is allowed to enter the first mode. The terminal device enters the first mode based on the first confirmation. The terminal device does not perform a corresponding operation in the first mode. It can be learned that, that the terminal device enters the first mode helps reduce power consumption of the terminal device and improve a battery life of the terminal device. Further, when the terminal device is in the first mode, the terminal device may perform at least one of the following: The terminal device sends the SRS; or the terminal device measures the PRS, to implement low-power positioning on the terminal device.

In a possible implementation, the first confirmation is for confirming that the terminal device is allowed to enter the first mode in an RRC inactive state, and that the terminal device enters the first mode based on the first confirmation includes: The terminal device enters the first mode when the terminal device is in the RRC inactive state.

Alternatively, the first confirmation is for confirming that the terminal device is allowed to enter the first mode in an RRC idle state, and that the terminal device enters the first mode based on the first confirmation includes: The terminal device enters the first mode when the terminal device is in the RRC idle state.

In this implementation, when the terminal device is in the RRC inactive state or the RRC idle state, the terminal device may enter the first mode. First, when the terminal device is in the RRC inactive state or the RRC idle state, the power consumption is lower. The network device enables, through the first confirmation, the terminal device to not need, when the terminal device is in the RRC inactive state or the RRC idle state, to be frequently woken up to monitor the paging message or measure the signal, to avoid a waste of the power of the terminal device, and further reduce the power consumption of the terminal device. The terminal device sends the SRS or measures the PRS in the first mode, to implement the low-power positioning on the terminal device.

A ninth aspect of this application provides a communication method, including:
A network device receives a first request from a terminal device, where the first request is used by the terminal device to request to enter a first mode. The network device sends first confirmation to the terminal device, where the first confirmation is for confirming that the terminal device is allowed to enter the first mode. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In the foregoing technical solution, the network device receives the first request from the terminal device, where the first request is used by the terminal device to request to enter the first mode. The network device sends the first confirmation to the terminal device, where the first confirmation is for confirming that the terminal device is allowed to enter the first mode, so that the terminal device enters the first mode. It can be learned that the terminal device does not perform a corresponding operation in the first mode. This helps reduce power consumption of the terminal device and improve a battery life of the terminal device. Further, when the terminal device is in the first mode, the terminal device may perform at least one of the following: The terminal device sends the SRS; or the terminal device measures the PRS, to implement low-power positioning on the terminal device.

In a possible implementation, the network device is an AMF, and the method further includes:
The AMF sends a first notification to a location management device, where the first notification is for notifying the location management device that the terminal device is to enter the first mode.

In this implementation, if the network device is the AMF, the AMF may further notify the location management device that the terminal device is to enter the first mode, so that the location management device determines a status of the terminal device. In this way, the location management device can perform communication transmission with the terminal device in an appropriate time period. For example, the location management device may interact with the terminal device after the terminal device exits from the first mode, to avoid a network resource waste.

In another possible implementation, the method further includes:
The AMF sends first information to an access network device, where the first information includes a second notification, and the second notification is for notifying the access network device that the terminal device is to enter the first mode.

In this implementation, the AMF may further notify the access network device that the terminal device is to enter the first mode, to avoid a case in which the terminal device schedules or pages the terminal device when the terminal device is in the first mode.

In another possible implementation, the first information further includes at least one of the following: waiting duration, an entry time point, or a triggering event for the terminal device to enter the first mode, or an exit time point or a triggering event for the terminal device to exit from the first mode.

In this implementation, the first information further includes configuration information for the terminal device to enter the first mode and configuration information for the terminal device to exit from the first mode, so that the access network device learns of a specific time period in which the terminal device is in the first mode. This helps the access network device reasonably schedule the terminal device, and avoids the network resource waste caused because the terminal device is in the first mode.

In another possible implementation, the network device is a location management device, and the method further includes:
The location management device sends a second request to an AMF or an access network device, where the second request is for requesting to configure the terminal device to enter the first mode. The location management device receives second confirmation from the AMF or the access network device, where the second confirmation is for confirming that the terminal device is allowed to enter the first mode.

In this implementation, before sending the first confirmation to the terminal device, the location management device may first ask for instructions from the AMF or the access network device on whether the terminal device is allowed to enter the first mode, to avoid a case in which when the AMF or the access network device needs to perform service communication transmission with the terminal device, the location management device directly configures the terminal device to enter the first mode, and ensure normal service running of the terminal device.

In another possible implementation, the method further includes:
The location management device sends second information to the access network device and/or the AMF, where the second information includes a third notification, and the third notification is for notifying the access network device and/or the AMF that the terminal device is to enter the first mode.

In this implementation, after the location management device configures the terminal device to enter the first mode, the location management device may notify the access network device and/or the AMF that the terminal device is to enter the first mode, so that the access network device and/or the AMF determine/determines status of the terminal device, to avoid a problem of a network resource waste caused by scheduling or paging the terminal device by the access network device and/or the AMF when the terminal device is in the first mode.

In another possible implementation, the second information further includes at least one of the following: waiting duration, an entry time point, or a triggering event for the terminal device to enter the first mode, or an exit time point or a triggering event for the terminal device to exit from the first mode.

In this implementation, the second information further includes configuration information for the terminal device to enter the first mode and configuration information for the terminal device to exit from the first mode. In this way, the solution is more comprehensive, so that the access network device and/or the AMF schedule/schedules or page/pages the terminal device at an appropriate time point, to improve communication efficiency.

A tenth aspect of this application provides a communication method, including:
A terminal device receives an RRC release message from a first access network device, where the RRC release message is for releasing the terminal device to an RRC inactive state or an RRC idle state, and the first access network device is a last serving access network device of the terminal device. Then, the terminal device receives a paging message from a second access network device, where the paging message includes first indication information, the first indication information indicates the terminal device to enter a first mode, and the second access network device is an access network device on which the terminal device currently camps. The terminal device enters the first mode based on the first indication information. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In the foregoing technical solution, the terminal device may receive the RRC release message. In this way, the terminal device can enter the RRC inactive state or the RRC idle state. The terminal device receives the paging message from the second access network device, where the paging message includes first indication information, and the first indication information indicates the terminal device to enter the first mode. Then, the terminal device enters the first mode based on the first indication information. It can be learned from the foregoing solution that, when the terminal device is in the first mode, the terminal device does not perform a corresponding operation. It can be learned that, when management and control of a network on the terminal device are ensured, that the terminal device enters the first mode helps reduce power consumption of the terminal device and improve a battery life of the terminal device. In addition, when the terminal device is in the RRC inactive state or the RRC idle state, the power consumption is lower. In addition, when the terminal device is in the RRC inactive state or the RRC idle state, the terminal device may enter the first mode, and the terminal device does not need to be frequently woken up to monitor the paging message or measure a signal, to avoid a waste of the power of the terminal device. Therefore, the power consumption of the terminal device is further reduced. The terminal device sends the SRS or measures the PRS in the first mode, to implement low-power positioning on the terminal device.

An eleventh aspect of this application provides a communication method, including:
A second access network device sends a paging message to a terminal device, where the paging message includes first indication information, the first indication information indicates the terminal device to enter a first mode, and the second access network device is an access network device on which the terminal device currently camps. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In the foregoing technical solution, the second access network device sends the paging message to the terminal device, where the paging message includes the first indication information, and the first indication information indicates the terminal device to enter the first mode. It can be learned from the foregoing solution that, when the terminal device is in the first mode, the terminal device does not perform a corresponding operation. It can be learned that, when management and control of a network on the terminal device are ensured, that the terminal device enters the first mode helps reduce power consumption of the terminal device and improve a battery life of the terminal device. In addition, when the terminal device is in an RRC inactive state or an RRC idle state, the power consumption is lower. In addition, when the terminal device is in the RRC inactive state or the RRC idle state, the terminal device may enter the first mode, and the terminal device does not need to be frequently woken up to monitor the paging message or measure a signal, to avoid a waste of the power of the terminal device. Therefore, the power consumption of the terminal device is further reduced. The terminal device sends the SRS or measures the PRS in the first mode, to implement low-power positioning on the terminal device.

Based on the tenth aspect or the eleventh aspect, this application provides a possible implementation. The paging message further includes waiting duration for the terminal device to enter the first mode, an entry time point and a triggering event for entering the first mode, and an exit time point or a triggering event for the terminal device to exit from the first mode.

A twelfth aspect of this application provides a communication apparatus, including:
a transceiver module, configured to receive first information from an access network device, where the first information is for configuring the communication apparatus to enter a first mode, and the first information is carried in an RRC release message or an RRC reconfiguration message; and
a processing module, configured to enter the first mode based on the first information. When the communication apparatus is in the first mode, the communication apparatus does not perform at least one of the following: The communication apparatus monitors a paging message; the communication apparatus searches for at least one of the following: an SSB or a SIB1 message; or the communication apparatus measures an SSB. When the communication apparatus is in the first mode, the communication apparatus performs at least one of the following: The communication apparatus sends an SRS; or the communication apparatus measures a PRS.

In a possible implementation, the first information is for configuring the communication apparatus to enter the first mode when the communication apparatus is in an RRC inactive state, and the processing module is specifically configured to enter the first mode when the communication apparatus is in the RRC inactive state; or
the first information is for configuring the communication apparatus to enter the first mode when the communication apparatus is in an RRC idle state, and the processing module is specifically used by the communication apparatus to enter the first mode when the communication apparatus is in the RRC idle state.

In another possible implementation, the first information includes at least one of the following: first indication information, waiting duration for the communication apparatus to enter the first mode, an entry time point or a triggering event for entering the first mode, or an exit time point or a triggering event for the communication apparatus to exit from the first mode, where the first indication information indicates the communication apparatus to enter the first mode.

In another possible implementation, the transceiver module is further configured to:
send a first request or capability information to the access network device, an AMF, or a location management device, where the first request is for requesting to configure the communication apparatus to enter the first mode, and the capability information includes information indicating that the communication apparatus supports the first mode.

In another possible implementation, the transceiver module is further configured to:
send any one of the following to the access network device: second information, an RRC resume request message, or an RRC setup request message, where the second information indicates that the communication apparatus exits from the first mode, and the RRC resume request message or the RRC setup request message indicates that the communication apparatus exits from the first mode.

In another possible implementation, the second information is carried in the RRC resume request message, or the second information is carried in the RRC setup request message.

A thirteenth aspect of this application provides a communication apparatus, including:
a processing module, configured to determine first information, where the first information is for configuring a terminal device to enter a first mode; and
a transceiver module, configured to send the first information to the terminal device, where the first information is carried in an RRC release message or an RRC reconfiguration message. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In a possible implementation, the first information is for configuring the terminal device to enter the first mode when the terminal device is in an RRC inactive state; or the first information is for configuring the terminal device to enter the first mode when the terminal device is in an RRC idle state.

In another possible implementation, the first information includes at least one of the following: first indication information, waiting duration, an entry time point, or a triggering event for the terminal device to enter the first mode, or an exit time point or a triggering event for the terminal device to exit from the first mode, where the first indication information indicates the terminal device to enter the first mode.

In another possible implementation, the transceiver module is further configured to:
receive a first request or capability information from the terminal device, where the first request is for requesting to configure the terminal device to enter the first mode, and the capability information includes information indicating that the terminal device supports the first mode.

In another possible implementation, the transceiver module is further configured to:
send a first notification to an AMF, where the first notification is for notifying the AMF that the terminal device is to enter the first mode; and/or
sending a second notification to a location management device, where the second notification is for notifying the location management device that the terminal device is to enter the first mode.

In another possible implementation, the transceiver module is further configured to:
receive third information from an AMF or a location management device, where the third information includes a first request or capability information, where the first request is for requesting to configure the terminal device to enter the first mode, and the capability information includes information indicating that the terminal device supports the first mode.

In another possible implementation, the third information further includes at least one of the following: waiting duration, an entry time point, or a triggering event for the terminal device to enter the first mode, or an exit time point or a triggering event for the terminal device to exit from the first mode.

In another possible implementation, the transceiver module is further configured to:
send a first response to the AMF, where the first response is for confirming that the terminal device is to enter the first mode; and/or
send a second response to the location management device, where the second response is for confirming that the terminal device is to enter the first mode.

In another possible implementation, the transceiver module is further configured to:
receive second information, an RRC resume request message, or an RRC setup request message from the terminal device, where the second information indicates that the terminal device exits from the first mode, and the RRC resume request message or the RRC setup request message indicates that the terminal device exits from the first mode.

In another possible implementation, the second information is carried in the RRC resume request message, or the second information is carried in the RRC setup request message.

In another possible implementation, the transceiver module is further configured to:
send a third notification to the AMF, where the third notification is for notifying the AMF that the terminal device exits from the first mode; and/or
send a fourth notification to the location management device, where the fourth notification is for notifying the location management device that the terminal device exits from the first mode.

A fourteenth aspect of this application provides a communication apparatus, including:
a transceiver module, configured to receive a second notification from an access network device, where the second notification is for notifying the communication apparatus that a terminal device is to enter a first mode. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In a possible implementation, the transceiver module is further configured to:
receive a fourth notification from the access network device, where the fourth notification is for notifying that the terminal device exits from the first mode.

In another possible implementation, the second notification is carried in a position information update message.

A fifteenth aspect of this application provides a communication apparatus, including:
a transceiver module, configured to receive a first notification from an access network device, where the first notification is for notifying the communication apparatus that a terminal device is to enter a first mode. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In a possible implementation, the transceiver module is further configured to:
receive a third notification from the access network device, where the third notification is for notifying that the terminal device exits from the first mode.

A sixteenth aspect of this application provides a communication apparatus, including:
a transceiver module, configured to send third information to an access network device or an AMF, where the third information includes a first request or capability information, where the first request is for requesting to configure a terminal device to enter a first mode, and the capability information includes information indicating that the terminal device supports the first mode. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In a possible implementation, the third information further includes at least one of the following: waiting duration, an entry time point, or a triggering event for the terminal device to enter the first mode, or an exit time point or a triggering event for the terminal device to exit from the first mode.

In another possible implementation, the transceiver module is further configured to:
receive the first request or the capability information from the terminal device.

In another possible implementation, the transceiver module is further configured to:
send a second request to the AMF, where the second request is for requesting to allow the terminal device to enter the first mode; and
receive a confirmation message from the AMF, where the confirmation message is for confirming that the terminal device is allowed to enter the first mode.

In another possible implementation, the transceiver module is further configured to:
receive a second notification or a second response from the access network device, where the second notification is for notifying the communication apparatus that the terminal device is to enter the first mode, and the second response is for confirming that the terminal device is to enter the first mode.

In another possible implementation, the second notification or the second response is carried in a position information response message or a position information update message.

In another possible implementation, the transceiver module is further configured to:
receive a fourth notification from the access network device, where the fourth notification is for notifying that the terminal device exits from the first mode.

In another possible implementation, the fourth notification is carried in the position information update message.

In another possible implementation, the transceiver module is specifically configured to:
send a position information request message to the access network device, where the position information request message includes the third information.

A seventeenth aspect of this application provides a communication apparatus, including:
a transceiver module, configured to send third information to an access network device, where the third information includes a first request or capability information, where the first request is for requesting to configure a terminal device to enter a first mode, and the capability information includes information indicating that the terminal device supports the first mode. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In another possible implementation, the transceiver module is further configured to:
receive the third information from a location management device, where the third information includes the first request or the capability information, where the first request is for requesting to configure the terminal device to enter the first mode, and the capability information includes the information indicating that the terminal device supports the first mode.

In another possible implementation, the transceiver module is further configured to:
receive the first request or the capability information from the terminal device, where the first request is for requesting to configure the terminal device to enter the first mode, and the capability information includes the information indicating that the terminal device supports the first mode.

In a possible implementation, the transceiver module is further configured to:
receive a first notification or a first response from the access network device, where the first notification is for notifying the communication apparatus that the terminal device is to enter the first mode, and the first response is for confirming that the terminal device is to enter the first mode.

In another possible implementation, the transceiver module is further configured to:
receive a third notification from the access network device, where the third notification is for notifying the communication apparatus that the terminal device exits from the first mode.

An eighteenth aspect of this application provides a communication apparatus, including:
a transceiver module, configured to: receives a second request from a location management device, where the second request is for requesting the communication apparatus to allow a terminal device to enter a first mode; and send a confirmation message to the location management device, where the confirmation message is for confirming that the terminal device is allowed to enter the first mode. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In a possible implementation, the transceiver module is further configured to:
receive a first notification from an access network device, where the first notification is for notifying the communication apparatus that the terminal device is to enter the first mode.

In another possible implementation, the transceiver module is further configured to:
receive a third notification from the access network device, where the third notification is for notifying the communication apparatus that the terminal device exits from the first mode.

A nineteenth aspect of this application provides a communication apparatus, including:
a transceiver module, configured to: send a first request to a network device, where the first request is used by the communication apparatus to request to enter a first mode; and receive first confirmation from the network device, where the first confirmation is for confirming that the communication apparatus is allowed to enter the first mode; and
a processing module, configured to enter the first mode based on the first confirmation. When a terminal device is in the first mode, the communication apparatus does not perform at least one of the following: The communication apparatus monitors a paging message; the communication apparatus searches for at least one of the following: an SSB or a SIB1 message; or the communication apparatus measures an SSB. When the communication apparatus is in the first mode, the communication apparatus performs at least one of the following: The communication apparatus sends an SRS; or the communication apparatus measures a PRS.

In a possible implementation, the first confirmation is for confirming that the communication apparatus is allowed to enter the first mode in an RRC inactive state, and the processing module is specifically configured to enter the first mode when the communication apparatus is in the RRC inactive state; or
the first confirmation is for confirming that the communication apparatus is allowed to enter the first mode in an RRC idle state, and the processing module is specifically configured to enter the first mode when the communication apparatus is in the RRC idle state.

A twentieth aspect of this application provides a communication apparatus, including:
a transceiver module, configured to: receive a first request from a terminal device, where the first request is used by the terminal device to request to enter a first mode; and send first confirmation to the terminal device, where the first confirmation is for confirming that the terminal device is allowed to enter the first mode. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In a possible implementation, the communication apparatus is an AMF, and the transceiver module is further configured to:
send a first notification to a location management device, where the first notification is for notifying the location management device that the terminal device is to enter the first mode.

In another possible implementation, the transceiver module is further configured to:
send first information to an access network device, where the first information includes a second notification, and the second notification is for notifying the access network device that the terminal device is to enter the first mode.

In another possible implementation, the first information further includes at least one of the following: waiting duration, an entry time point, or a triggering event for the terminal device to enter the first mode, or an exit time point or a triggering event for the terminal device to exit from the first mode.

In another possible implementation, the communication apparatus is a location management device, and the transceiver module is further configured to:
send a second request to an AMF or an access network device, where the second request is for requesting to configure the terminal device to enter the first mode; and
receive second confirmation from the AMF or the access network device, where the second confirmation is for confirming that the terminal device is allowed to enter the first mode.

In another possible implementation, the transceiver module is further configured to:
send second information to the access network device and/or the AMF, where the second information includes a third notification, and the third notification is for notifying the access network device and/or the AMF that the terminal device is to enter the first mode.

In another possible implementation, the second information further includes at least one of the following: waiting duration, an entry time point, or a triggering event for the terminal device to enter the first mode, or an exit time point or a triggering event for the terminal device to exit from the first mode.

A twenty-first aspect of this application provides a communication apparatus, including:
a transceiver module, configured to: receive an RRC release message from a first access network device, where the RRC release message is for releasing the communication apparatus to an RRC inactive state or an RRC idle state, and the first access network device is a last serving access network device of the communication apparatus; and receive a paging message from a second access network device, where the paging message includes first indication information, the first indication information indicates a terminal device to enter a first mode, and the second access network device is an access network device on which the communication apparatus currently camps; and
a processing module, configured to enter the first mode based on the first indication information.

When the communication apparatus is in the first mode, the communication apparatus does not perform at least one of the following: The communication apparatus monitors a paging message; the communication apparatus searches for at least one of the following: an SSB or a SIB1 message; or the communication apparatus measures an SSB. When the communication apparatus is in the first mode, the communication apparatus performs at least one of the following: The communication apparatus sends an SRS; or the communication apparatus measures a PRS.

In a possible implementation, the paging message further includes waiting duration for the communication apparatus to enter the first mode, an entry time point and a triggering event for entering the first mode, and an exit time point and a triggering event for the communication apparatus to exit from the first mode.

A twenty-second aspect of this application provides a communication apparatus, including:
a transceiver module, configured to send a paging message to a terminal device, where the paging message includes first indication information, the first indication information indicates the terminal device to enter a first mode, and the communication apparatus is an access network device on which the terminal device currently camps. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS.

In a possible implementation, the paging message further includes at least one of the following: waiting duration for the terminal device to enter the first mode, an entry time point or a triggering event for entering the first mode, or an exit time point or a triggering event for the terminal device to exit from the first mode.

A twenty-third aspect of this application provides a communication apparatus. The communication apparatus includes a processor. The processor is configured to invoke and run a computer program stored in a memory, so that the processor implements any implementation of any one of the first aspect to the eleventh aspect.

Optionally, the communication apparatus further includes a transceiver. The processor is further configured to control the transceiver to receive and send a signal.

Optionally, the communication apparatus includes the memory. The memory stores the computer program.

A twenty-fourth aspect of this application provides a computer program product including instructions. When the computer program product runs on a computer, the computer is enabled to perform any implementation of the first aspect to the eleventh aspect.

A twenty-fifth aspect of this application provides a computer-readable storage medium, including computer instructions. When the computer instructions are run on a computer, the computer is enabled to perform any implementation of the first aspect to the eleventh aspect.

A twenty-sixth aspect of this application provides a chip apparatus, including a processor, configured to: connect to a memory, and invoke a program stored in the memory, so that the processor performs any implementation of the first aspect to the eleventh aspect.

A twenty-seventh aspect of this application provides a communication system. The communication system includes the communication apparatus shown in the twelfth aspect and the communication apparatus shown in the thirteenth aspect.

Optionally, the communication system further includes the communication apparatus shown in the fourteenth aspect and the communication apparatus shown in the fifteenth aspect.

Optionally, the communication system further includes the communication apparatus shown in the sixteenth aspect. In this implementation, optionally, the communication system further includes the communication apparatus shown in the eighteenth aspect.

Optionally, the communication system further includes the communication apparatus shown in the sixteenth aspect and the communication system shown in the seventeenth aspect.

A twenty-eighth aspect of this application provides a communication system. The communication system includes the communication apparatus shown in the nineteenth aspect and the communication apparatus shown in the twentieth aspect.

A twenty-ninth aspect of this application provides a communication system. The communication system includes the communication apparatus shown in the twenty-first aspect and the communication apparatus shown in the twenty-second aspect.

It can be learned from the foregoing technical solutions that embodiments of this application have the following advantages.

It can be learned from the foregoing technical solutions that the terminal device receives the first information from the access network device, where the first information is for configuring the terminal device to enter the first mode. The first information is carried in the RRC release message or the RRC reconfiguration message. Then, the terminal device enters the first mode based on the first information. When the terminal device is in the first mode, the terminal device does not perform at least one of the following: The terminal device monitors the paging message; the terminal device searches for at least one of the following: the SSB or the SIB1 message; or the terminal device measures the SSB. When the terminal device is in the first mode, the terminal device performs at least one of the following: The terminal device sends the SRS; or the terminal device measures the PRS. It can be learned that the terminal device may receive the first information sent by the access network device, where the first information is for configuring the terminal device to enter the first mode. In this way, the terminal device can enter the first mode based on the first information. In addition, when the terminal device is in the first mode, the terminal device does not perform the corresponding operation. It can be learned that, that the terminal device enters the first mode helps reduce the power consumption of the terminal device and improve the battery life of the terminal device. When the terminal device is in the first mode, the terminal device may perform at least one of the following: The terminal device sends the SRS; or the terminal device measures the PRS, to implement the low-power positioning on the terminal device. Further, the first information may be carried in the RRC release message or the RRC reconfiguration message, and the RRC release message may be for releasing the terminal device to the RRC inactive state or the RRC idle state. When the terminal device is in the RRC inactive state or the RRC idle state, the power consumption is lower. In addition, when the terminal device is in the RRC inactive state or the RRC idle state, the terminal device may enter the first mode, and the terminal device does not need to be frequently woken up to monitor the paging message or measure the signal, to avoid the waste of the power of the terminal device. The power consumption of the terminal device is further reduced. The terminal device sends the SRS or measures the PRS in the first mode, to implement the low-power positioning on the terminal device.

### BRIEF DESCRIPTION OF DRAWINGS

FIG. 1 is a diagram of a communication system according to an embodiment of this application;
FIG. 2 is a diagram of an embodiment of a communication method according to embodiments of this application;
FIG. 3 is a diagram of another embodiment of a communication method according to embodiments of this application;
FIG. 4 is a diagram of another embodiment of a communication method according to embodiments of this application;
FIG. 5 is a diagram of another embodiment of a communication method according to embodiments of this application;
FIG. 6 is a diagram of another embodiment of a communication method according to embodiments of this application;
FIG. 7 is a diagram of another embodiment of a communication method according to embodiments of this application;
FIG. 8 is a diagram of another embodiment of a communication method according to embodiments of this application;
FIG. 9 is a diagram of another embodiment of a communication method according to embodiments of this application;
FIG. 10 is a diagram of another embodiment of a communication method according to embodiments of this application;
FIG. 11 is a diagram of a structure of a communication apparatus according to an embodiment of this application;
FIG. 12 is a diagram of another structure of a communication apparatus according to an embodiment of this application;
FIG. 13 is a diagram of a structure of a terminal device according to an embodiment of this application; and
FIG. 14 is a diagram of another structure of a communication apparatus according to an embodiment of this application.

### DESCRIPTION OF EMBODIMENTS

Embodiments of this application provide a communication method and a communication apparatus, to reduce power consumption of a terminal device and implement low-power positioning on the terminal device.

The following clearly and completely describes the technical solutions in embodiments of this application with reference to the accompanying drawings in embodiments of this application. It is clear that embodiments are merely some but not all of embodiments of this application. All other embodiments obtained by a person skilled in the art based on embodiments of this application without creative efforts shall fall within the protection scope of this application.

Reference to "an embodiment", "some embodiments", or the like in this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specially emphasized in another manner. The terms "include", "contain", "have", and their variants all mean "include but are not limited to", unless otherwise specially emphasized in another manner.

In the descriptions of this application, unless otherwise specified, "/" means "or". For example, A/B may represent A or B. "And/or" in this specification describes only an association relationship between associated objects and represents that there may be three relationships. For example, A and/or B may represent the following three cases: Only A exists, both A and B exist, and only B exists. In addition, "at least one" means one or more, and "a plurality of" means two or more. "At least one of the following" or a similar expression thereof indicates any combination of the items, and includes a singular item or any combination of plural items. For example, at least one of a, b, or c may indicate a, b, c, a and b, a and c, b and c, or a, b, and c. a, b, and c may be singular or plural.

The technical solutions in this application may be applied to various communication systems, for example, a 5th generation (5th generation, 5G) mobile communication system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) after a 5G network, and a vehicle to everything (vehicle to everything, V2X) communication system.

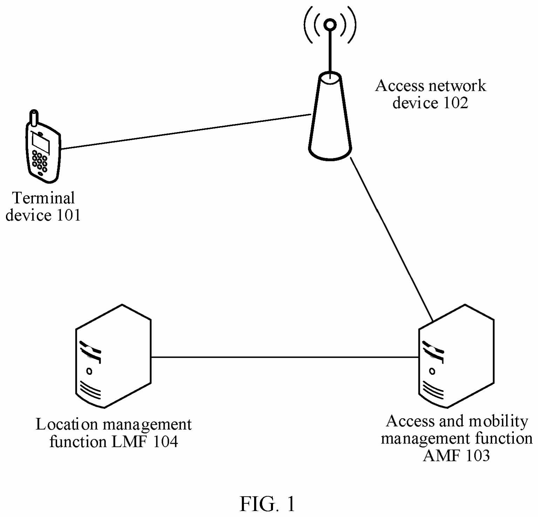

FIG. 1 is a diagram of a communication system according to an embodiment of this application. Refer to FIG. 1. The communication system includes an access network device 102, an AMF103, and a location management function (location management function, LMF) 104.

Optionally, a terminal device 101 is connected to the access network device 102 through an interface, the access network device is connected to the AMF 103 through an interface, and the AMF 103 is connected to the LMF 104 through an interface. The LMF 104 is configured to perform positioning calculation and management on a location of the terminal device 101.

For example, the terminal device 101 is connected to the access network device 102 through an NR-Uu interface, the access network device 102 is connected to the AMF 103 through an NG-C interface, and the AMF 103 is connected to the LMF 104 through an NL1 interface.

FIG. 1 shows only an example in which the communication system includes the access network device 102. In actual application, the communication system may further include more access network devices. This is not specifically limited in this application.

The following describes a terminal device, an access network device, an AMF, and a location management device that are provided in this application.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity for a user), for example, a handheld device or a vehicle-mounted device having a wireless connection function. Currently, the terminal device may include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The access network device is an apparatus that is deployed in a radio access network and that provides the wireless communication function for the terminal device. The access network device may be a radio access network (radio access network RAN) node that enables the terminal device to access a wireless network.

The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like, or may be a network device in a 5G mobile communication system, for example, a next generation NodeB (next generation NodeB, gNB), a transmission reception point (transmission reception point, TRP), or a transmission point (transmission point, TP) in a new radio (new radio, NR) system, or one or a group of (including a plurality of antenna panels) antenna panels of a base station in the 5G mobile communication system. Alternatively, the access network device may be a network node that a gNB or a transmission point consists of, for example, a baseband unit (baseband unit, BBU) or a distributed unit (distributed unit, DU).

In some deployment, the gNB may include a central unit (central unit, CU) and the DU. The gNB may further include an active antenna unit (active antenna unit, AAU). The CU implements some functions of the gNB, and the DU implements some functions of the gNB.

For example, the CU is responsible for processing a non-real-time protocol and service, and implements functions of an RRC layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU.

It may be understood that the access network device may be a device including one or more of a CU node, a DU node, and an AAU node. In addition, the CU may be classified as a network device in a radio access network (radio access network, RAN), or the CU may be classified as a network device in a core network (core network, CN). This is not limited in this application.

The AMF is responsible for access control, registration management, service management, mobility management, and the like for the terminal device to access a network.

An LMF is configured to perform positioning calculation and management on a location of the terminal device.

In this application, a name of the AMF may change with evolution of a communication system. In a current communication system or a future communication system, a functional network element that has another name and that has a function similar to that of the AMF may be understood as the AMF in this application, and is used in the communication method provided in embodiments of this application.

In this application, the LMF is a name in the current communication system. In the future communication system, a name of the LMF may change with the evolution of the communication system. Therefore, the LMF is referred to as the location management device hereinafter to describe the technical solutions in this application. The location management device is configured to perform positioning calculation on the location of the terminal device. In the current communication system or the future communication system, a functional network element that has another name and that has a function similar to that of the location management device may be understood as the location management device in this application, and is used in the communication method provided in this application.

The following first describes three possible RRC states of the terminal device. The three RRC states are an RRC connected (RRC connected) state, an RRC inactive (RRC inactive) state, and an RRC idle (RRC idle) state.

RRC connected state: There is an RRC connection between the terminal device and the access network device, and a connection between the access network device and the core network is set up for the terminal device. The access network device stores a UE context of the terminal device. In the RRC connected state, a unicast message can be sent between the access network device and the terminal device through the RRC connection.

RRC inactive state: An RRC connection between the terminal device and the access network device is suspended (suspended), and a connection between the access network device and the core network is set up for the terminal device. The access network device stores a UE context of the terminal device. The terminal device may receive a broadcast message and a paging message. The paging message is initiated by the access network device.

RRC idle state: No RRC connection is set up between the terminal device and the access network device, and no connection between the access network device and the core network is set up for the terminal device. The access network device does not have a UE context of the terminal device. The terminal device may receive a broadcast message and a paging message. The paging message is initiated by the core network.

The technical solutions in this application are applicable to a low-power-consumption requirement scenario of the terminal device, for example, a low-power positioning scenario of the terminal device. The following describes the technical solutions in this application by using the low-power positioning scenario of the terminal device as an example.

For the low-power positioning scenario, scenarios to which the technical solutions in this application are applicable include but are not limited to an uplink positioning scenario, a downlink positioning scenario, and an uplink-downlink positioning scenario. This is not specifically limited in this application.

For example, when the terminal device is in the RRC inactive state, and an uplink positioning process or a downlink positioning process is performed on the terminal device. For example, in the downlink positioning process, the terminal device performs positioning measurement, and reports a measurement result. In the uplink positioning process, the terminal device sends an SRS. In addition, behavior of the terminal device in the RRC inactive state is further specified. Specifically, when the terminal device is in the RRC inactive state, the terminal device needs to perform the following operations:
1. The terminal device monitors the paging message, so that the terminal device can access a network in time when the network pages the terminal device.
2. The terminal device periodically searches for at least one of the following: an SSB or a SIB1 message, so that the terminal device obtains cell information, and determines whether the terminal device is in a radio-access-network-based notification area (RAN-based notification area, RNA) and a tracking area (tracking area, TA).
3. The terminal device measures an SSB. The terminal device may report signal quality of the SSB, so that the access network device reselects a corresponding cell for the terminal device, or enables the terminal device to camp on a current cell.

Therefore, when the terminal device is in the RRC inactive state, the terminal device needs to be frequently woken up to perform the foregoing operations. Therefore, the terminal device cannot be in a sleep state in a long time period. Consequently, positioning power of the terminal device in the RRC inactive state is higher. However, if the terminal device directly does not perform the foregoing specified operations, the network loses management on the terminal device.

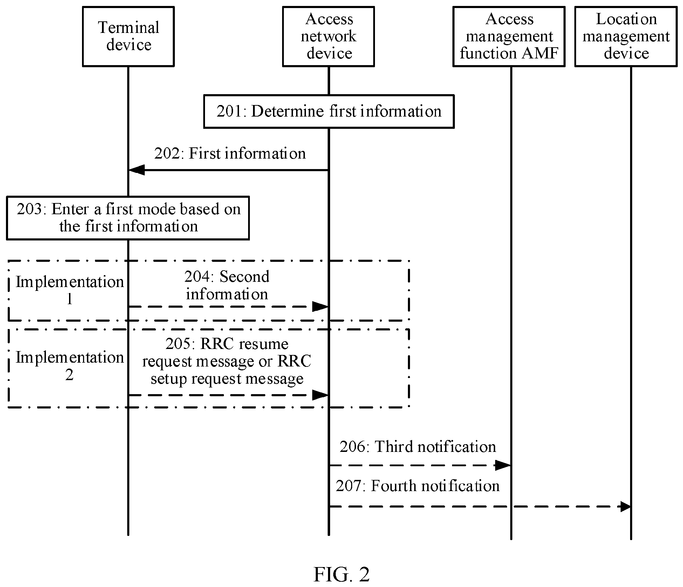

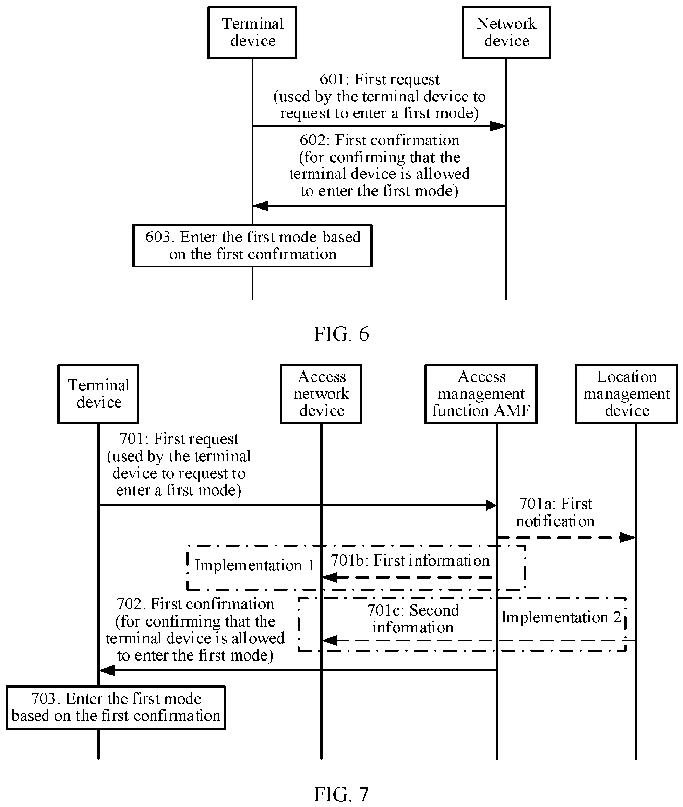

This application provides the corresponding technical solutions, to reduce the power consumption of the terminal device and implement low-power positioning on the terminal device while ensuring the management of the network on the terminal device. For details, refer to detailed descriptions in the embodiment shown in FIG. 2 or FIG. 6 hereinafter.

It should be noted that the foregoing describes, by using an example in which the positioning process is performed on the terminal device in the RRC inactive state, a problem to be resolved in this application. In actual application, this application is applicable to all low-power-consumption requirement scenarios of the terminal device. The foregoing example does not constitute a limitation on this application. For example, the technical solutions in this application are also applicable to a scenario in which the low-power positioning is performed on the terminal device in the RRC idle state.

The following describes a first mode in this application.

A possible understanding is that the first mode is a mode or a sub-state that is defined in this application and that is of the terminal device in the RRC inactive state or the RRC idle state. For example, the first mode may be the mode of the terminal device in the RRC inactive state or the RRC idle state. A name of the mode is not limited in this application. For example, the first mode may be referred to as a power-saving mode, a power-saving mode, a low-power mode, an ultra-low-power mode, or the like. This is not specifically limited in this application. The first mode may also be referred to as a first state, and the first state may be understood as the sub-state of the terminal device in the RRC inactive state or the RRC idle state. A name of the sub-state is not limited in this application. For example, the first state may be referred to as a power-saving state, a power-saving state, a low-power state, an ultra-low-power state, or the like. This is not specifically limited in this application.

Another possible understanding is that the first mode may also be referred to as a first state, and the first state is a 4^{th} state that is defined in this application and that is other than the foregoing three RRC states. The first state may be referred to as a power-saving state, a power-saving state, a low-power state, an ultra-low-power state, or the like. This is not specifically limited in this application. The power-saving state is an independent state. For example, in the power-saving state, an RRC state of the terminal device includes the RRC inactive state or the RRC idle state.

When the terminal device is in the first mode, the terminal device does not perform at least one of the following:
1. The terminal device monitors the paging message.
2. The terminal device searches for at least one of the following: the SSB or the SIB1 message.
3. The terminal device measures the SSB.

Optionally, that the terminal device does not monitor the paging message may alternatively be understood as that the terminal device does not monitor or receive a physical downlink control channel (physical downlink control channel, PDCCH).

When the terminal device is in the first mode, the terminal device may perform at least one of the following:

The terminal device sends the SRS; or the terminal device measures a PRS.

The technical solutions in this application are described below with reference to specific embodiments.

FIG. 2 is a diagram of an embodiment of a communication method according to embodiments of this application. Refer to FIG. 2. The communication method includes the following steps.

201: An access network device determines first information.

The first information is for configuring a terminal device to enter a first mode. For the first mode, refer to the foregoing related descriptions. Details are not described herein again.

For example, the first information may be referred to as power-saving mode information, power-saving mode information (PSM info), low-power mode information, power-saving state information, power-saving state information, low-power state information, or the like. A name of the first information is not specifically limited in this application.

Optionally, the first information is carried in an RRC release (RRC release) message or an RRC reconfiguration (RRC reconfiguration) message.

Optionally, the first information includes at least one of the following: first indication information, waiting duration for the terminal device to enter the first mode, an entry time point or a triggering event for entering the first mode, or an exit time point or a triggering event for the terminal device to exit from the first mode. The first indication information indicates terminal device to enter the first mode.

For example, the triggering event for the terminal device to enter the first mode includes: The terminal device has no service data to be sent in a period of time. The triggering event for the terminal device to exit from the first mode includes: The terminal device has to-be-transmitted service data. The waiting duration is duration for which the terminal device waits, after the terminal device receives the first information, to enter the first mode.

In a possible implementation, the access network device may directly indicate, by using the first indication information, the terminal device to enter the first mode. On this basis, some related configurations (for example, the waiting duration, the entry time point, the exit time point) for the terminal device to enter the first mode may be further delivered, so that the terminal device enters the first mode and exits from the first mode at appropriate time points.

In another possible implementation, the access network device may indirectly indicate, by using some related configurations (for example, the waiting duration, the entry time point, or the exit time point) of the first mode, the terminal device to enter the first mode.

The following describes two possible implementations of the first information. This application is still applicable to another implementation. This is not specifically limited herein.

Implementation 1: The first information may be an information element in the RRC release message or the RRC reconfiguration message.

In the implementation 1, the following describes some possible manners of the first information.

Manner A: The first information includes a first information element in the RRC release message or the RRC reconfiguration message, and the first information element indicates the terminal device to enter the first mode.

A name of the first information element may be a first indication. For example, the first indication may be referred to as a power-saving mode indication, a power-saving mode indication, a low-power mode indication, a power-saving state indication, a power-saving state indication, a low-power state indication, or the like. The name of the first information element is not specifically limited in this application.

Manner B: The first information includes a second information element in the RRC release message or the RRC reconfiguration message, and the second information element is for configuring the terminal device to enter the first mode.

For example, a name of the second information element may be a first configuration. For example, the first configuration may be referred to as a power-saving mode configuration, a power-saving mode configuration (PSM configuration), a low-power mode configuration, a power-saving state configuration, a power-saving state configuration, a low-power state configuration, or the like. This is not specifically limited in this application.

The second information element may include at least one of the following: the waiting duration for the terminal device to enter the first mode, the entry time point or the triggering event for entering the first mode, or the exit time point or the triggering event for the terminal device to exit from the first mode. That is, the access network device indirectly indicates, by using related configuration information that is of the first mode and that is in the second information element, the terminal device to enter the first mode.

Manner C: The first information includes a first information element and a second information element in the RRC release message or the RRC configuration message. For the first information element and the second information element, refer to the related descriptions of the manner A and the manner B.

In the manner C, the access network device directly indicates, by using the first information element, the terminal device to enter the first mode, and delivers the related configurations of the first mode via the second information element.

Manner D: The first information includes a fourth information element in the RRC release message or the RRC configuration message, and the fourth information element includes a first sub information element and/or a second sub information element.

In a possible implementation, the fourth information element includes the second sub information element. The fourth information element has an indication function, and indicates the terminal device to enter the first mode. The second sub information element is for configuring configuration information of the first mode of the terminal device.

In another possible implementation, the fourth information element includes the first sub information element and the second sub information element. The first sub information element indicates the terminal device to enter the first mode, and the second sub information element is for configuring configuration information of the first mode of the terminal device.

The second sub information element includes at least one of the following: the waiting duration for the terminal device to enter the first mode, the entry time point or the triggering event for entering the first mode, or the exit time point or the triggering event for the terminal device to exit from the first mode. That is, the access network device directly indicates, by using the first sub information element, the terminal device to enter the first mode, and delivers the related configurations of the first mode via the second sub information element.

For example, a name of the fourth information element may be a second configuration. For example, the second configuration may be referred to as a power-saving mode configuration, a power-saving mode configuration (PSM configuration), a low-power mode configuration, a power-saving state configuration, a power-saving state configuration, a low-power state configuration, or the like. This is not specifically limited in this application. The first sub information element may be understood as a sub information element for indication, and the second sub information element may be understood as a sub information element for configuration.

Implementation 2: The first information may include the first indication information, and the first indication information indicates the terminal device to enter the first mode.

For example, when a value of the first indication information is "1" or "true (true)", the first indication information indicates the terminal device to enter the first mode.

Optionally, the first information further includes at least one of the following: the waiting duration for the terminal device to enter the first mode, the entry time point or the triggering event for entering the first mode, or the exit time point or the triggering event for the terminal device to exit from the first mode.

In a possible implementation, the first information is for configuring the terminal device to enter the first mode when the terminal device is in an RRC inactive state.

In this implementation, the access network device may configure the terminal device to enter the first mode when the terminal device is in the RRC inactive state. When the terminal device is in the RRC inactive state, the terminal device may enter the first mode.

For example, the access network device releases the terminal device to the RRC inactive state by using the RRC release message. The RRC release message includes the first information. In this case, after the terminal device receives the RRC release message, the terminal device enters the RRC inactive state, and the terminal device enters the first mode based on the first information.

In another possible implementation, the first information is for configuring the terminal device to enter the first mode when the terminal device is in an RRC idle state.

In this implementation, the access network device may configure the terminal device to enter the first mode when the terminal device is in the RRC idle state. When the terminal device is in the RRC idle state, the terminal device may enter the first mode.

For example, the access network device releases the terminal device to the RRC idle state by using the RRC release message. The RRC release message includes the first information. In this case, after the terminal device receives the RRC release message, the terminal device enters the RRC idle state, and the terminal device enters the first mode based on the first information.

Optionally, for an implementation in which the first information is carried in the RRC reconfiguration message, it may be understood that the access network device configures the first information in advance. When the terminal device is in the RRC inactive state or the RRC idle state, the terminal device enters the first mode.

It should be noted that the first information may alternatively be carried in another RRC message. This is not specifically limited in this application. For example, the first information may alternatively be carried in a downlink information transfer (downlink information transfer) message.

202: The access network device sends the first information to the terminal device. Accordingly, the terminal device receives the first information from the access network device.

For the first information, refer to the related descriptions of step 201. Details are not described herein again.

For example, the access network device sends the RRC release message or the RRC reconfiguration message to the terminal device. The RRC release message or the RRC reconfiguration message includes the first information.

203: The terminal device enters the first mode based on the first information.

When the terminal device is in the first mode, the terminal device does not perform at least one of the following:
1. The terminal device monitors a paging message.
2. The terminal device searches for at least one of the following: an SSB or a SIB1 message.
3. The terminal device measures an SSB.

When the terminal device is in the first mode, the terminal device may perform at least one of the following:
1. The terminal device sends an SRS.
2. The terminal device measures a PRS.

For example, in an uplink positioning scenario, the terminal device may send the SRS. The access network device receives the SRS, measures the SRS to obtain a measurement result, and reports the measurement result to a location management device. The location management device may position the terminal device based on the measurement result. Because the terminal device sends the SRS in the first mode, the technical solutions in this application can implement low-power positioning on the terminal device.

For example, in a downlink positioning scenario, the terminal device may receive the PRS, and measure the PRS to obtain a measurement result. Then, the terminal device may send the measurement result to a location management device. The location management device may position the terminal device based on the measurement result. Because the terminal device measures the PRS in the first mode, the technical solutions in this application can implement low-power positioning on the terminal device.

It should be noted that the foregoing provides descriptions by using an example in which the SRS is used as a reference signal for positioning in the uplink positioning scenario. In actual application, another uplink signal may alternatively be used for uplink positioning. This is not specifically limited in this application. For example, the another uplink signal is an uplink preamble signal.

It should be noted that the foregoing provides descriptions by using an example in which the PRS is used as a reference signal for positioning in the downlink positioning scenario. In actual application, another downlink signal may alternatively be used for downlink positioning. This is not specifically limited in this application. For example, the another uplink signal is a tracking reference signal.

In a possible implementation, the first information is for configuring the terminal device to enter the first mode in the RRC inactive state. Step 203 specifically includes: When the terminal device is in the RRC inactive state, the terminal device enters the first mode.

In another possible implementation, the first information is for configuring the terminal device to enter the first mode in the RRC idle state. Step 203 specifically includes: When the terminal device is in the RRC idle state, the terminal device enters the first mode.

It can be learned that, when the terminal device is in the RRC inactive state or the RRC idle state, the terminal device enters the first mode. That is, the terminal device does not need to perform at least one of the following: monitoring the paging message, searching for the SSB and the SIB1 message, measuring the SSB and the SIB1 message, or the like. When the terminal device is in the RRC inactive state or the RRC idle state, the terminal device enters the first mode, and sends the SRS, to perform low-power uplink positioning on the terminal device. Alternatively, when the terminal device is in the RRC inactive state or the RRC idle state, the terminal device enters the first mode, measures the PRS, and reports the measurement result, to perform low-power downlink positioning on the terminal device.

Optionally, the terminal device exits from the first mode. The following describes several possible implementations.

The following describes an implementation 1 with reference to step 204.

Optionally, the embodiment shown in FIG. 2 further includes step 204. Step 204 may be performed after step 203.

204: The terminal device sends second information to the access network device. Accordingly, the access network device receives the second information from the terminal device.

The second information indicates that the terminal device exits from the first mode. For example, the second information may be power-saving mode cancellation (PSM cancellation) information.

Optionally, the second information is carried in an RRC resume request (RRC resume request) message, an RRC setup request (RRC setup request) message, or another RRC message. For example, the another RRC message may be an RRC resume complete (RRC resume complete) message or an RRC setup complete (RRC setup complete) message.

Specifically, the first information is carried in the RRC release message, and the RRC release message is for releasing the terminal device to the RRC inactive state. Accordingly, the second information is carried in the RRC resume request message, and is for requesting to resume to an RRC connected state. In this case, the access network device may send an RRC resume message to the terminal device, to resume the terminal device to the RRC connected state. Alternatively, the access network device may send the RRC release message to the terminal device, to release the terminal device to the RRC inactive state.

Specifically, the first information is carried in the RRC release message, and the RRC release message is for releasing the terminal device to the RRC idle state. Accordingly, the second information is carried in the RRC setup request message, and is for requesting to set up an RRC connection to the access network device.

In a possible implementation, the second information is indication information, and indicates that the terminal device exits from the first mode.

In another possible implementation, the second information is an information element in the RRC resume request message or the RRC setup request message, and indicates that the terminal device exits from the first mode. For example, a name of the information element is power-saving mode cancellation (PSM cancellation), power-saving mode cancellation, power-saving state cancellation, power-saving state cancellation, or the like. The name of the information element is not specifically limited in this application.

The following describes an implementation 2 with reference to step 205.

Optionally, the embodiment shown in FIG. 2 further includes step 205. Step 205 may be performed after step 203.

205: The terminal device sends an RRC resume request message or an RRC setup request message to the access network device. Accordingly, the access network device receives the RRC resume request message or the RRC setup request message from the terminal device.

The RRC resume request message or the RRC setup request message indicates that the terminal device exits from the first mode.

Specifically, the first information is carried in the RRC release message, and the RRC release message is for releasing the terminal device to the RRC inactive state. Accordingly, the terminal device sends the RRC resume request message to the access network device, and the terminal device exits from the first mode. That is, if the access network device receives the RRC resume request message, the access network device may consider that the terminal device exits from the first mode.

In this case, the access network device may send an RRC resume message to the terminal device, to resume the terminal device to an RRC connected state. Alternatively, the access network device may send the RRC release message to the terminal device, to release the terminal device to the RRC inactive state.

Specifically, the first information is carried in the RRC release message, and the RRC release message is for releasing the terminal device to the RRC idle state. Accordingly, the terminal device sends the RRC setup request message to the access network device, and the terminal device exits from the first mode. That is, if the access network device receives the RRC setup request message, the access network device may consider that the terminal device exits from the first mode.

Optionally, the embodiment shown in FIG. 2 further includes step 206. Step 206 may be performed after step 204 or step 205.

206: The access network device sends a third notification to an AMF. Accordingly, the AMF receives the third notification from the access network device.

The third notification is for notifying the AMF that the terminal device exits from the first mode.

For example, the third notification is a power-saving mode cancellation notification (PSM cancellation notification), a power-saving mode cancellation notification, a power-saving state cancellation notification, or a low-power mode cancellation notification. A name of the third notification is not specifically limited in this application.

Optionally, the embodiment shown in FIG. 2 further includes step 207. Step 207 may be performed after step 204 or step 205.

207: The access network device sends a fourth notification to the location management device. Accordingly, the location management device receives the fourth notification from the access network device.

The fourth notification is for notifying the location management device that the terminal device exits from the first mode.

For example, the fourth notification is a power-saving mode cancellation notification (PSM cancellation notification), a power-saving mode cancellation notification, a power-saving state cancellation notification, or a low-power mode cancellation notification. A name of the fourth notification is not specifically limited in this application.

Optionally, the fourth notification is carried in a position information update (position information update) message.

It should be noted that the access network device may perform only step 206, may perform only step 207, or may perform both step 206 and step 207. This is not specifically limited in this application. For a solution in which the access network device performs both step 206 and step 207, there is no fixed execution sequence between step 206 and step 207. Step 206 may be performed before step 207; step 207 is performed before step 206; or step 206 and step 207 are simultaneously performed based on a case. This is not specifically limited in this application.

In this embodiment of this application, the terminal device receives the first information from the access network device, where the first information is for configuring the terminal device to enter the first mode. The first information is carried in the RRC release message or the RRC reconfiguration message. Then, the terminal device enters the first mode based on the first information. When the terminal device is in the first mode, the terminal device does not perform at least one of the following: The terminal device monitors the paging message; the terminal device searches for at least one of the following: the SSB or the SIB1 message; or the terminal device measures the SSB. When the terminal device is in the first mode, the terminal device performs at least one of the following: The terminal device sends the SRS; or the terminal device measures the PRS. It can be learned that the terminal device may receive the first information sent by the access network device, where the first information is for configuring the terminal device to enter the first mode. In this way, the terminal device can enter the first mode based on the first information. In addition, when the terminal device is in the first mode, the terminal device does not perform a corresponding operation. It can be learned that, that the terminal device enters the first mode helps reduce power consumption of the terminal device and improve a battery life of the terminal device. Further, when the terminal device is in the first mode, the terminal device may perform at least one of the following: The terminal device sends the SRS; or the terminal device measures the PRS, to implement the low-power positioning on the terminal device. In addition, the first information may be carried in the RRC release message or the RRC reconfiguration message. That is, the access network device may configure, by using an RRC message, the terminal device to enter the first mode. The RRC release message may be for releasing the terminal device to the RRC inactive state or the RRC idle state. When the terminal device is in the RRC inactive state or the RRC idle state, the power consumption is lower. In addition, when the terminal device is in the RRC inactive state or the RRC idle state, the terminal device may enter the first mode, and the terminal device does not need to be frequently woken up to monitor the paging message or measure a signal, to avoid a waste of the power of the terminal device. Therefore, the power consumption of the terminal device is further reduced. The terminal device sends the SRS or measures the PRS in the first mode, to implement the low-power positioning on the terminal device.

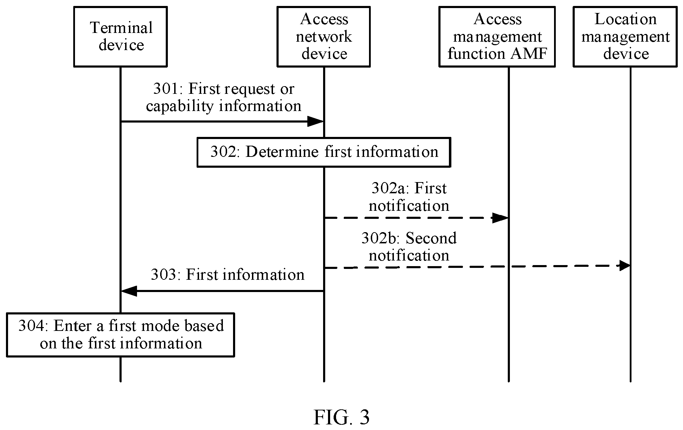

With reference to embodiments shown in FIG. 3 to FIG. 5, the following describes some possible scenarios of the embodiment shown in FIG. 2.

FIG. 3 is a diagram of another embodiment of a communication method according to embodiments of this application. Refer to FIG. 3. The communication method includes the following steps.

301: A terminal device sends a first request or capability information to an access network device. Accordingly, the access network device receives the first request or the capability information from the terminal device.

The first request is for requesting to configure the terminal device to enter a first mode. The capability information includes information indicating that the terminal device supports the first mode.

Specifically, the capability information includes information indicating whether the terminal device supports the first mode. For example, the capability information includes the information indicating that the terminal device supports the first mode.

For example, the information indicating whether the terminal device supports the first mode is indication information. When a value of the indication information is "1" or "true (true)", it indicates that the terminal device supports the first mode. When a value of the indication information is "0" or "false ", it indicates that the terminal device does not support the first mode.

For example, the first request may be referred to as a power-saving mode request (power-saving mode request, PSM request).

Optionally, the first request or the capability information is carried in an RRC message. For example, the first request or the capability information is carried in a user equipment assistance information (UE assistance information) message.

It should be noted that the capability information may further include information about some other capabilities of the terminal device. This is not specifically limited in this application.

302: The access network device determines first information.

Specifically, the access network device may determine the first information based on the first request or the capability information.

Step 302 is similar to step 201 in the embodiment shown in FIG. 2 above. For details, refer to the related descriptions of step 201 in the embodiment shown in FIG. 2. Details are not described herein again.

Optionally, the embodiment shown in FIG. 3 further includes step 302a and step 302b. Step 302a and step 302b may be performed after step 302.

302a: The access network device sends a first notification to the AMF. Accordingly, the AMF receives the first notification from the access network device.

The first notification is for notifying the AMF that the terminal device is to enter the first mode.

302b: The access network device sends a second notification to a location management device. Accordingly, the location management device receives the second notification from the AMF.

The second notification is for notifying the location management device that the terminal device is to enter the first mode.

Optionally, the second notification is carried in a position information update message.

303: The access network device sends the first information to the terminal device. Accordingly, the terminal device receives the first information from the access network device.

304: The terminal device enters the first mode based on the first information.

Step 303 and step 304 are similar to step 202 and step 203 in the embodiment shown in FIG. 2. For details, refer to the related descriptions of step 202 and step 203 in the embodiment shown in FIG. 2.

In the embodiment shown in FIG. 3, the terminal device may send the first request or the capability information to the access network device. The first request is for requesting to configure the terminal device to enter the first mode. The capability information includes the information indicating that the terminal device supports the first mode. The access network device may determine the first information, and send the first information to the terminal device. Then, the terminal device enters the first mode based on the first information. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device may perform at least one of the following: The terminal device sends an SRS; or the terminal device measures a PRS. It can be learned that the terminal device may request the access network device for entering the first mode, or the terminal device sends, to the access network device, the information indicating that the terminal device supports the first mode, so that the access network device is triggered to configure the terminal device to enter the first mode. That the terminal device enters the first mode helps reduce power consumption of the terminal device and improve a battery life of the terminal device. Further, when the terminal device is in the first mode, the terminal device may perform at least one of the following: The terminal device sends the SRS; or the terminal device measures the PRS, to implement low-power positioning on the terminal device.

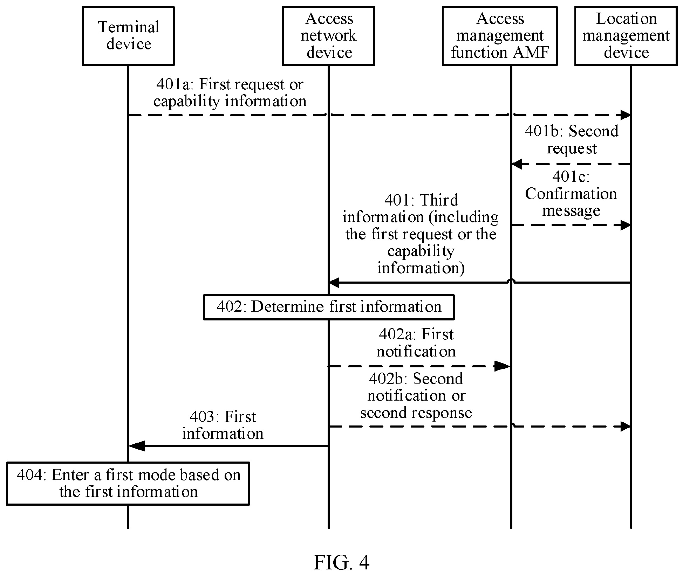

FIG. 4 is a diagram of another embodiment of a communication method according to embodiments of this application. Refer to FIG. 4. The communication method includes the following steps.

401: A location management device sends third information to an access network device, where the third information includes a first request or capability information. Accordingly, the access network device receives the third information from the location management device.

The first request is for requesting to configure a terminal device to enter a first mode. The capability information includes information indicating that the terminal device supports the first mode. For the capability information, refer to the related descriptions of the capability information in step 301 in the embodiment shown in FIG. 3.

Optionally, the third information further includes at least one of the following: waiting duration, an entry time point, or a triggering event for the terminal device to enter the first mode, or an exit time point or a triggering event for the terminal device to exit from the first mode. The information shown above may be understood as configuration information of the first mode. The configuration information that is of the first mode and that is in the third information may be understood as configuration information that is of the first mode and that is recommended by the location management device to the access network device. For related descriptions of these terms, refer to the related descriptions in the embodiment shown in FIG. 2.

In a possible implementation, the location management device may determine the first request.

In another possible implementation, the location management device may receive the first request or the capability information from the terminal device. Optionally, the embodiment shown in FIG. 4 further includes step 401a. Step 401a may be performed before step 401.

401a: The terminal device sends the first request or the capability information to the location management device. Accordingly, the location management device receives the first request or the capability information from the terminal device.

Step 401a is similar to step 301 in the embodiment shown in FIG. 3. For details, refer to the related descriptions of step 301 in the embodiment shown in FIG. 3. Details are not described herein again.

Optionally, the embodiment shown in FIG. 4 further includes step 401b and step 401c. Step 401b and step 401 c may be performed after step 401a.

401b: The location management device sends a second request to an AMF. Accordingly, the AMF receives the second request from the location management device.

The second request is for requesting the AMF to allow the terminal device to enter the first mode.

For example, the second request may be a power-saving mode request (PSM request), a power-saving mode request, a power-saving state request, a power-saving state request, or a low-power mode request. A name of the second request is not specifically limited in this application.

401c: The AMF sends a confirmation message to the location management device. Accordingly, the location management device receives the confirmation message from the AMF.

The confirmation message is for confirming that the terminal device is allowed to enter the first mode.

For example, the confirmation message may be power-saving mode confirmation (PSM confirmation), power-saving mode confirmation, power-saving state confirmation, power-saving state confirmation, or low-power mode confirmation. A name of the confirmation message is not specifically limited in this application.

402: The access network device determines first information.

Specifically, the access network device determines the first information based on the third information.

For the first information, refer to the related descriptions of step 201 in the embodiment shown in FIG. 2. Details are not described herein again.

It should be noted that configuration information that is of the first mode and that is in the first information may be the same as or different from the configuration information that is of the first mode and that is in the third information in step 401. This is not specifically limited in this application. The access network device may directly use the recommended configuration information that is of the first mode and that is in the third information, or may re-determine the configuration information of the first mode for the terminal device with reference to an actual case and the third information. This is not specifically limited in this application.

Optionally, the embodiment shown in FIG. 4 further includes step 402a. Step 402a may be performed after step 402.

402a: The access network device sends a first notification to the AMF. Accordingly, the AMF receives the first notification from the access network device.

The first notification indicates that the terminal device is to enter the first mode.

Optionally, the embodiment shown in FIG. 4 further includes step 402b. Step 402b may be performed after step 402.

402b: The access network device sends a second notification or a second response to the location management device. Accordingly, the location management device receives the second notification or the second response from the access network device.

In a possible implementation, if the third information includes the first request, the access network device sends the second response to the location management device, where the second response is for confirming that the terminal device is to enter the first mode. Accordingly, the location management device receives the second response from the access network device.

In another possible implementation, if the third information includes the capability information, the access network device sends the second notification to the location management device, where the second notification is for notifying the location management device that the terminal device is to enter the first mode. Accordingly, the location management device receives the second notification from the access network device.

It should be noted that there is no fixed execution sequence between step 402a and step 402b. Specifically, step 402a may be performed before step 402b; step 402b is performed before step 402a; or step 402a and step 402b are simultaneously performed based on a case. This is not specifically limited in this application.

403: The access network device sends the first information to the terminal device. Accordingly, the terminal device receives the first information from the access network device.

It should be noted that there is no fixed execution sequence between steps 402a and 402b and step 403. Step 402a and step 402b may be performed before step 403, step 403 is performed before step 402a and step 402b; or steps 402a and 402b and step 403 are simultaneously performed based on a case.

404: The terminal device enters the first mode based on the first information.

Step 403 and step 404 are similar to step 202 and step 203 in the embodiment shown in FIG. 2. For details, refer to the related descriptions of step 202 and step 203 in the embodiment shown in FIG. 2.

In the embodiment shown in FIG. 4, the access network device receives the third information from the location management device, where the third information includes the first request or the capability information, where the first request is for requesting to configure the terminal device to enter the first mode, and the capability information includes the information indicating that the terminal device supports the first mode. The access network device determines the first information. The access network device sends the first information to the terminal device. The terminal device enters the first mode based on the first information. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS. It can be learned that the location management device may send the third information to the access network device, to trigger the access network device to configure the terminal device to enter the first mode. This helps reduce power consumption of the terminal device and improve a battery life of the terminal device. Further, when the terminal device is in the first mode, the terminal device may perform at least one of the following: The terminal device sends the SRS; or the terminal device measures the PRS, to implement low-power positioning on the terminal device.

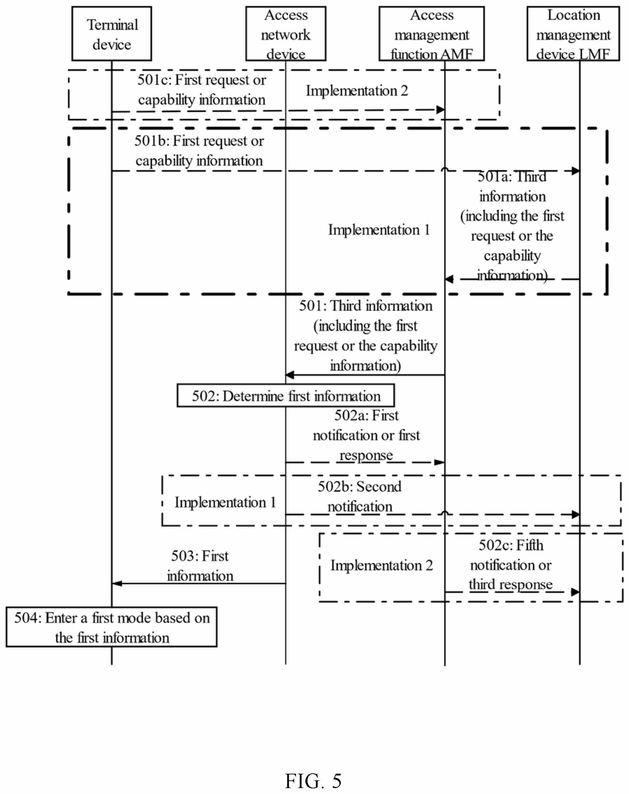

FIG. 5 is a diagram of another embodiment of a communication method according to embodiments of this application. Refer to FIG. 5. The communication method includes the following steps.

501: An AMF sends third information to an access network device, where the third information includes a first request or capability information. Accordingly, the access network device receives the third information from the AMF.

For the third information, refer to the related descriptions of step 401 in the embodiment shown in FIG. 4. Details are not described herein again.

In a possible implementation, the AMF may determine the first request.

In another possible implementation, the AMF may receive the first request or the capability information from a terminal device. The following describes several possible implementations.

The following describes an implementation 1 with reference to step 501a.

Optionally, the embodiment shown in FIG. 5 further includes step 501a. Step 501a may be performed before step 501.

501a: A location management device sends the third information to the AMF, where the third information includes the first request or the capability information. Accordingly, the AMF receives the third information from the location management device.

Optionally, the third information further includes at least one of the following: waiting duration, an entry time point, or a triggering event for the terminal device to enter a first mode, or an exit time point or a triggering event for the terminal device to exit from the first mode. The information shown above may be understood as configuration information of the first mode. The configuration information that is of the first mode and that is in the third information may be understood as configuration information that is of the first mode and that is recommended by the location management device to the access network device. For related descriptions of these terms, refer to the related descriptions in the embodiment shown in FIG. 2.

In a possible implementation, the location management device may determine the first request.

In another possible implementation, the location management device may receive the first request or the capability information from the terminal device. In this implementation, optionally, the embodiment shown in FIG. 5 further includes step 501b. Step 501b may be performed before step 501a.

501b: The terminal device sends the first request or the capability information to the location management device. Accordingly, the location management device receives the first request or the capability information from the terminal device.

Step 501b is similar to step 301 in the embodiment shown in FIG. 3. For details, refer to the related descriptions of step 301 in the embodiment shown in FIG. 3. Details are not described herein again.

The following describes an implementation 2 with reference to step 501c.

501c: The terminal device sends the first request or the capability information to the AMF. Accordingly, the AMF receives the first request or the capability information from the terminal device.

502: The access network device determines first information.

Specifically, the access network device determines the first information based on the third information.

For the first information, refer to the related descriptions of step 201 in the embodiment shown in FIG. 2. Details are not described herein again.

It should be noted that configuration information that is of the first mode and that is in the first information may be the same as or different from the configuration information that is of the first mode and that is in the third information in step 501a. This is not specifically limited in this application. The access network device may directly use the recommended configuration information that is of the first mode and that is in the third information, or may re-determine the configuration information of the first mode for the terminal device with reference to an actual case and the third information. This is not specifically limited in this application.

Optionally, the embodiment shown in FIG. 5 further includes step 502a. Step 502a may be performed after step 502.

502a: The access network device sends a first notification or a first response to the AMF. Accordingly, the AMF receives the first notification or the first response from the access network device.

In a possible implementation, the AMF sends the third information to the access network device, where the third information includes the first request. Accordingly, the access network device sends the first response to the AMF, where the first response is for confirming that the terminal device is to enter the first mode.

In another possible implementation, the AMF sends the third information to the access network device, where the third information includes the capability information. Accordingly, the access network device sends the first notification to the AMF, where the first notification is for notifying the AMF that the terminal device is to enter the first mode.

Optionally, the location management device may obtain information indicating that the terminal device is to enter the first mode. The following describes two possible implementations.

The following describes an implementation 1 with reference to step 502b.

Optionally, the embodiment shown in FIG. 5 further includes step 502b. Step 502b may be performed after step 502.

502b: The access network device sends a second notification to the location management device. Accordingly, the location management device receives the second notification from the access network device.

The second notification is for notifying the location management device that the terminal device is to enter the first mode.

Optionally, the second notification is carried in a position information update message.

The following describes an implementation 2 with reference to step 502c.

Optionally, the embodiment shown in FIG. 5 further includes step 502c. Step 502c may be performed after step 502.

502c: The AMF sends a fifth notification or a third response to the location management device. Accordingly, the location management device receives the fifth notification or the third response from the AMF.

In a possible implementation, the location management device sends third information to the AMF. The third information includes the first request. In this case, the AMF sends the third response to the location management device. The third response is for confirming that the terminal device is to enter the first mode.

In another possible implementation, the location management device sends the third information to the AMF. The third information includes the capability information. In this case, the AMF sends the fifth notification to the location management device. The fifth notification is for notifying the location management device that the terminal device is to enter the first mode.

503: The access network device sends the first information to the terminal device. Accordingly, the terminal device receives the first information from the access network device.

504: The terminal device enters the first mode based on the first information.

Step 503 and step 504 are similar to step 202 and step 203 in the embodiment shown in FIG. 2. For details, refer to the related descriptions of step 202 and step 203 in the embodiment shown in FIG. 2.

It should be noted that there is no fixed execution sequence between steps 502a and 502b and step 503. Step 502a and step 502b may be performed before step 503, step 503 is performed before step 502a and step 502b; or steps 502a and 502b and step 503 are simultaneously performed based on a case. This is not specifically limited in this application.

It should be noted that there is no fixed execution sequence between steps 502a and 502c and step 503. Step 502a and step 502c may be performed before step 503, step 503 is performed before step 502a and step 502c; or steps 502a and 502c and step 503 are simultaneously performed based on a case. This is not specifically limited in this application.

In the embodiment shown in FIG. 5, the access network device receives the third information from the AMF, where the third information includes the first request or the capability information, where the first request is for requesting to configure the terminal device to enter the first mode, and the capability information includes information indicating that the terminal device supports the first mode. The access network device determines the first information. The access network device sends the first information to the terminal device. The terminal device enters the first mode based on the first information. When the terminal device is in the first mode, the terminal device does not perform at least one of the following: The terminal device monitors a paging message; the terminal device searches for at least one of the following: an SSB or a SIB1 message; or the terminal device measures an SSB. When the terminal device is in the first mode, the terminal device performs at least one of the following: The terminal device sends an SRS; or the terminal device measures a PRS. It can be learned that the AMF may send the third information to the access network device, to trigger the access network device to configure the terminal device to enter the first mode. This helps reduce power consumption of the terminal device and improve a battery life of the terminal device. Further, when the terminal device is in the first mode, the terminal device may perform at least one of the following: The terminal device sends the SRS; or the terminal device measures the PRS, to implement low-power positioning on the terminal device.

In the embodiments shown in FIG. 2 to FIG. 5, descriptions are provided by using the solution in which the access network device determines the first information and delivers the first information to the terminal device as an example. In actual application, the AMF or the location management device may alternatively determine the first information, and send the first information to the terminal device via the access network device. This is not specifically limited in this application. Specifically, the AMF or the location management device sends a non-access stratum (non-access stratum, NAS) message to the access network device, where the NAS message carries the first information. Then, the access network device sends an RRC message to the terminal device, where the RRC message includes the NAS message. Optionally, the RRC message is in the downlink information transfer message.

FIG. 6 is a diagram of another embodiment of a communication method according to embodiments of this application. Refer to FIG. 6. The communication method includes the following steps.

601: A terminal device sends a first request to a network device, where the first request is used by the terminal device to request to enter a first mode. Accordingly, the network device receives the first request from the terminal device.

For example, the first request may be a power-saving request (PS request), a power-saving request, or a low-power request. A name of the first request is not specifically limited in this application.

The following describes, with reference to a form of the network device, some possible carriers for carrying the first request.
1. The network device is an access network device, and the first request is carried in an RRC message.
2. The network device is an AMF, and the first request is carried in a NAS message or a location service (location service, LCS) message.
3. The network device is a location management device, and the first request is carried in an LTE positioning protocol (LTE positioning protocol, LPP) message.

In a possible implementation, the first request is used by the terminal device to request to enter the first mode when the terminal device is in an RRC inactive state.

In another possible implementation, the first request is used by the terminal device to request to enter the first mode when the terminal device is in an RRC idle state.

For related descriptions of the first mode, refer to the foregoing related descriptions. Details are not described herein again.

602: The network device sends first confirmation to the terminal device, where the first confirmation is for confirming that the terminal device is allowed to enter the first mode. Accordingly, the terminal device receives the first confirmation from the network device.

The first confirmation is for confirming that the terminal device may enter the first mode.

For example, the first confirmation may be power-saving confirmation (PS confirmation, power-saving confirmation, or low-power confirmation. A name of the first confirmation is not specifically limited in this application.

The following describes some possible carriers for carrying the first confirmation.
1. The network device is the access network device, the first request is carried in the RRC message, and the first confirmation is carried in the RRC message.
2. The network device is the AMF, the first request is carried in the NAS message or the LCS message, and the first confirmation is carried in the NAS message or the LCS message.
3. The network device is the location management device, the first request is carried in the LPP message, and the first confirmation is carried in the LPP message.

In a possible implementation, the first request is used by the terminal device to request to enter the first mode when the terminal device is in the RRC inactive state. The first confirmation is for confirming that the terminal device is allowed to enter the first mode when the terminal device is in the RRC inactive state. In other words, the first confirmation is for confirming that the terminal device may enter the first mode when the terminal device is in the RRC inactive state.

In another possible implementation, the first request is used by the terminal device to request to enter the first mode when the terminal device is in the RRC idle state. The first confirmation is for confirming that the terminal device is allowed to enter the first mode when the terminal device is in the RRC idle state. In other words, the first confirmation is for confirming that the terminal device may enter the first mode when the terminal device is in the RRC idle state.

603: The terminal device enters the first mode based on the first confirmation.

Specifically, after the terminal device receives the first confirmation, the terminal device may enter the first mode.

When the terminal device is in the first mode, the terminal device does not perform at least one of the following:
1. The terminal device monitors a paging message.
2. The terminal device searches for at least one of the following: an SSB or a SIB1 message.
3. The terminal device measures an SSB.

When the terminal device is in the first mode, the terminal device performs at least one of the following:
1. The terminal device sends an SRS.
2. The terminal device measures a PRS.

For example, in an uplink positioning scenario, the terminal device may send the SRS. The access network device receives the SRS, measures the SRS to obtain a measurement result, and reports the measurement result to a location management device. The location management device may position the terminal device based on the measurement result. Because the terminal device may send the SRS in the first mode, the technical solutions in this application can implement uplink low-power positioning on the terminal device.

For example, in a downlink positioning scenario, the terminal device may receive the PRS, and measure the PRS to obtain a measurement result. Then, the terminal device may send the measurement result to a location management device. The location management device may position the terminal device based on the measurement result. Because the terminal device may measure the PRS in the first mode, the technical solutions in this application can implement downlink low-power positioning on the terminal device.

It should be noted that the foregoing provides descriptions by using an example in which the SRS is used as a reference signal for positioning in the uplink positioning scenario. In actual application, another uplink signal may alternatively be used for uplink positioning. This is not specifically limited in this application. For example, the another uplink signal is an uplink preamble signal.

It should be noted that the foregoing provides descriptions by using an example in which the PRS is used as a reference signal for positioning in the downlink positioning scenario. In actual application, another downlink signal may alternatively be used for downlink positioning. This is not specifically limited in this application. For example, the another uplink signal is a tracking reference signal.

In a possible implementation, the first confirmation is for confirming that the terminal device is allowed to enter the first mode when the terminal device is in the RRC inactive state. Step 603 specifically includes: When the terminal device is in the RRC inactive state, the terminal device enters the first mode.

In another possible implementation, the first confirmation is for confirming that the terminal device is allowed to enter the first mode when the terminal device is in the RRC idle state. Step 603 specifically includes: When the terminal device is in the RRC idle state, the terminal device enters the first mode.

It can be learned that, when the terminal device is in the RRC inactive state or the RRC idle state, the terminal device enters the first mode. When the terminal device is in the RRC inactive state or the RRC idle state, the terminal device enters the first mode. That is, the terminal device does not need to monitor the paging message, search for and measure the SSB and the SIB1 message, and/or the like. When the terminal device is in the RRC inactive state or the RRC idle state, the terminal device enters the first mode, and sends the SRS, to perform low-power uplink positioning on the terminal device. Alternatively, when the terminal device is in the RRC inactive state or the RRC idle state, the terminal device enters the first mode, performs PRS positioning measurement, and reports the measurement result, to perform low-power downlink positioning on the terminal device.

In this embodiment of this application, the terminal device sends the first request to the network device, where the first request is used by the terminal device to request to enter the first mode. The terminal device receives the first confirmation from the network device, where the first confirmation is for confirming that the terminal device is allowed to enter the first mode. The terminal device enters the first mode based on the first confirmation. When the terminal device is in the first mode, the terminal device performs at least one of the following: The terminal device sends the SRS; or the terminal device measures the PRS. It can be learned that the terminal device does not perform a corresponding operation in the first mode. This helps reduce power consumption of the terminal device and improve a battery life of the terminal device. Further, when the terminal device is in the first mode, the terminal device may perform at least one of the following: The terminal device sends the SRS; or the terminal device measures the PRS, to implement low-power positioning on the terminal device. In addition, the first confirmation is for confirming that the terminal device is allowed to enter the first mode when the terminal device is in the RRC inactive state or the RRC idle state. Therefore, when the terminal device is in the RRC inactive state or idle state, the terminal device may enter the first mode, and the terminal device does not need to be frequently woken up to monitor the paging message or measure a signal, to further reduce the power consumption of the terminal device. The terminal device sends the SRS or measures the PRS in the first mode, to implement the low-power positioning on the terminal device.

With reference to an embodiment shown in FIG. 7, the following describes a specific implementation process that is of the technical solutions in this application and that corresponds to case in which a network device is an AMF.

FIG. 7 is a diagram of another embodiment of a communication method according to embodiments of this application. Refer to FIG. 7. The communication method includes the following steps.

701: A terminal device sends a first request to an AMF, where the first request is used by the terminal device to request to enter a first mode. Accordingly, the AMF receives the first request from the terminal device.

Step 701 is similar to step 601 in the embodiment shown in FIG. 6. For details, refer to the related descriptions of step 601 in the embodiment shown in FIG. 6. Details are not described herein again.

Optionally, the embodiment shown in FIG. 7 further includes step 701a. Step 701a may be performed after step 701.

701a: The AMF sends a first notification to a location management device. Accordingly, the location management device receives the first notification from the AMF.

The first notification is for notifying the location management device that the terminal device is to enter the first mode.

For example, the first notification may be a power-saving notification, a power-saving notification, or a low-power notification. A name of the first notification is not specifically limited in this application.

Optionally, the AMF or the location management device may notify an access network device that the terminal device is to enter the first mode. The following describes two possible implementations.

The following describes an implementation 1 with reference to step 701b.

Optionally, the embodiment shown in FIG. 7 further includes step 701b. Step 701b may be performed after step 701.

701b: The AMF sends first information to the access network device. Accordingly, the access network device receives the first information from the AMF.

The first information includes a second notification, and the second notification is for notifying the access network device that the terminal device is to enter the first mode.

Optionally, the first information further includes at least one of the following: waiting duration, an entry time point, or a triggering event for the terminal device to enter the first mode, or an exit time point or a triggering event for the terminal device to exit from the first mode. For the information, refer to the foregoing related descriptions. Details are not described herein again.

The following describes an implementation 2 with reference to step 701c.

Optionally, the embodiment shown in FIG. 7 further includes step 701c. Step 701c may be performed after step 701.

701c: The location management device sends second information to the access network device. Accordingly, the access network device receives the second information from the location management device.

The second information includes a third notification, and the third notification is for notifying the access network device that the terminal device is to enter the first mode.

Optionally, the second information further includes at least one of the following: waiting duration, an entry time point, or a triggering event for the terminal device to enter the first mode, or an exit time point or a triggering event for the terminal device to exit from the first mode. For these terms, refer to the foregoing related descriptions. Details are not described herein again.

Optionally, the second information is carried in a position information update message.

Step 702: The AMF sends first confirmation to the terminal device, where the first confirmation is for confirming that the terminal device is allowed to enter the first mode. Accordingly, the terminal device receives the first confirmation from the AMF.

703: The terminal device enters the first mode based on the first confirmation.

Step 702 and step 703 are similar to step 602 and step 603 in the embodiment shown in FIG. 6. For details, refer to the related descriptions of step 602 and step 603 in the embodiment shown in FIG. 6. Details are not described herein again.

It should be noted that there is no fixed execution sequence between step 701b and step 702. Step 701b may be performed before step 702, step 702 is performed before step 701b, or step 701b and step 702 are simultaneously performed based on a case. This is not specifically limited in this application.

It should be noted that there is no fixed execution sequence between step 701c and step 702. Step 701c may be performed before step 702, step 702 is performed before step 701c, or step 701c and step 702 are simultaneously performed based on a case. This is not specifically limited in this application.

Optionally, the terminal device may send second indication information to the AMF, to indicate that the terminal device exits from the first mode. Alternatively, the terminal device requests the AMF for exiting from the first mode. Alternatively, the terminal device sends a message to the AMF, where the message does not carry a request for requesting to enter the first mode. The AMF may determine that the terminal device exits from the first mode, and notify the access network device and the location management device that the terminal device exits from the first mode.

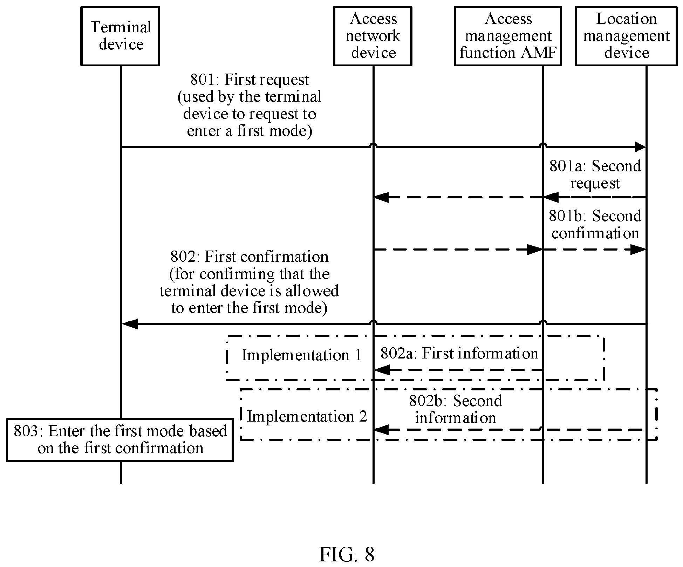

With reference to an embodiment shown in FIG. 8, the following describes a specific implementation process that is of the technical solutions in this application and that corresponds to case in which a network device is a location management device.

FIG. 8 is a diagram of another embodiment of a communication method according to embodiments of this application. Refer to FIG. 8. The communication method includes the following steps.

801: A terminal device sends a first request to a location management device, where the first request is used by the terminal device to request to enter a first mode. Accordingly, the location management device receives the first request from the terminal device.

Step 801 is similar to step 601 in the embodiment shown in FIG. 6. For details, refer to the related descriptions of step 601 in the embodiment shown in FIG. 6. Details are not described herein again.

Optionally, the embodiment shown in FIG. 8 further includes step 801a and step 801b. Step 801a and step 801b may be performed after step 801.

801a: The location management device sends a second request to an AMF and/or an access network device. Accordingly, the AMF and/or the access network device receive/receives the second request from the location management device.

The second request is for requesting to configure the terminal device to enter the first mode. In other words, the second request is for requesting to allow the terminal device to enter the first mode.

For example, the second request is a power-saving request (PS request), a power-saving request, or a low-power request. A name of the second request is not specifically limited in this application.

801b: The access network device and/or the AMF send/sends second confirmation to the location management device. Accordingly, the location management device receives the second confirmation from the access network device and/or the AMF.

The second confirmation is for confirming that the terminal device is allowed to enter the first mode.

For example, the second confirmation is power-saving confirmation (PS confirmation), power-saving confirmation, or low-power confirmation. A name of the second confirmation is not specifically limited in this application.

802: The location management device sends first confirmation to the terminal device, where the first confirmation is for confirming that the terminal device is allowed to enter the first mode. Accordingly, the terminal device receives the first confirmation from the location management device.

803: The terminal device enters the first mode based on the first confirmation.

Step 802 and step 803 are similar to step 602 and step 603 in the embodiment shown in FIG. 6. For details, refer to the related descriptions of step 602 and step 603 in the embodiment shown in FIG. 6. Details are not described herein again.

Optionally, the access network device may obtain related information indicating that the terminal device enters the first mode. The following describes two possible implementations.

The following describes an implementation 1 with reference to step 802a. Optionally, the embodiment shown in FIG. 8 further includes step 802a. Step 802a may be performed after step 802.

802a: The AMF sends first information to the access network device. Accordingly, the access network device receives the first information from the AMF.

Step 802a is similar to step 701b in the embodiment shown in FIG. 7. For details, refer to the related descriptions of step 701b in the embodiment shown in FIG. 7. Details are not described herein again.

Optionally, in the implementation 1, before step 802a, the location management device may send a notification message to the AMF, where the notification message is for notifying the AMF of a message indicating that the terminal device enters the first mode.

The following describes an implementation 2 with reference to step 802b. Optionally, the embodiment shown in FIG. 8 further includes step 802b. Step 802b may be performed after step 802.

802b: The location management device sends second information to the access network device. Accordingly, the access network device receives the second information from the location management device.

Step 802b is similar to step 701c in the embodiment shown in FIG. 7. For details, refer to the related descriptions of step 701c in the embodiment shown in FIG. 7. Details are not described herein again.

It should be noted that there is no fixed execution sequence between step 802a and step 802. Step 802a may be performed before step 802, step 802 is performed before step 802a, or step 802a and step 802 are simultaneously performed based on a case. This is not specifically limited in this application.

It should be noted that there is no fixed execution sequence between step 802b and step 802. Step 802b may be performed before step 802, step 802 is performed before step 802b, or step 802b and step 802 are simultaneously performed based on a case. This is not specifically limited in this application.

Optionally, the terminal device may send third indication information to the location management device, to indicate that the terminal device exits from the first mode. Alternatively, the terminal device requests the location management device for exiting from the first mode. Alternatively, when the terminal device re-accesses a network, the terminal device sends a message to the location management device, where the message does not carry a request for requesting to enter the first mode. The location management device may determine that the terminal device exits from the first mode, and notify the access network device and the AMF that the terminal device exits from the first mode.

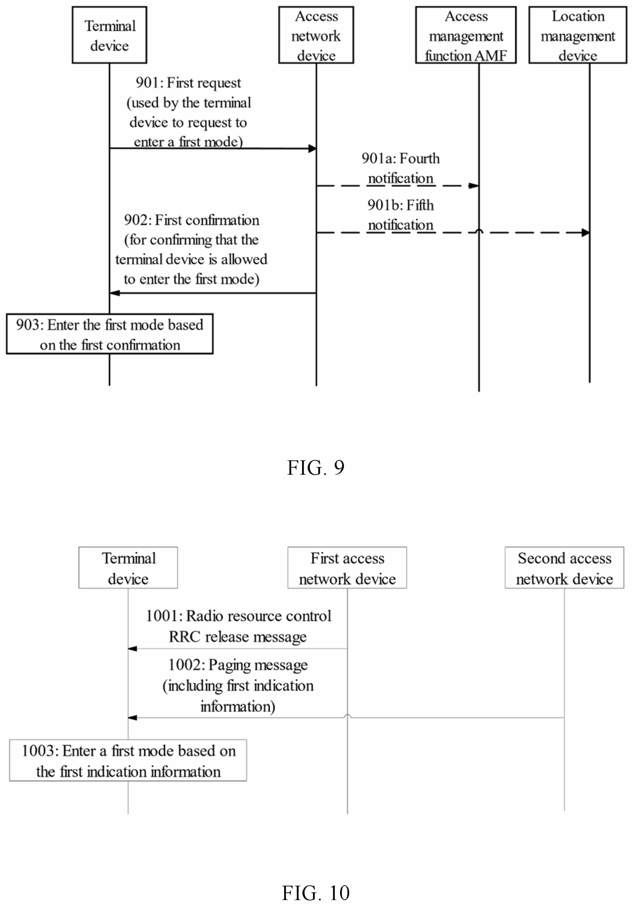

With reference to an embodiment shown in FIG. 9, the following describes a specific implementation process that is of the technical solutions in this application and that corresponds to case in which a network device is an access network device.

FIG. 9 is a diagram of another embodiment of a communication method according to embodiments of this application. Refer to FIG. 9. The communication method includes the following steps.

901: A terminal device sends a first request to an access network device, where the first request is used by the terminal device to request to enter a first mode. Accordingly, the access network device receives the first request from the terminal device.

Step 901 is similar to step 601 in the embodiment shown in FIG. 6. For details, refer to the related descriptions of step 601 in the embodiment shown in FIG. 6. Details are not described herein again.

Optionally, the embodiment shown in FIG. 9 further includes step 901a and step 901b. Step 901a and step 901b may be performed after step 901.

901a: The access network device sends a fourth notification to an AMF. Accordingly, the AMF receives the fourth notification from the access network device.

The fourth notification is for notifying the AMF that the terminal device is to enter the first mode.

901b: The access network device sends a fifth notification to a location management device. Accordingly, the location management device receives the fifth notification from the location management device.

The fifth notification is for notifying the location management device that the terminal device is to enter the first mode.

Optionally, the fifth notification is carried in a position information update message.

902: The access network device sends first confirmation to the terminal device, where the first confirmation is for confirming that the terminal device is allowed to enter the first mode. Accordingly, the terminal device receives the first confirmation from the access network device.

903: The terminal device enters the first mode based on the first confirmation.

Step 902 and step 903 are similar to step 602 and step 603 in the embodiment shown in FIG. 6. For details, refer to the related descriptions of step 602 and step 603 in the embodiment shown in FIG. 6. Details are not described herein again.

It should be noted that there is no fixed execution sequence between steps 901a and 901b and step 902. Step 901a and step 901b may be performed before step 902, step 901a and step 901b may be performed after step 902, or steps 901a and 901b and step 902 may be simultaneously performed based on a case. This is not specifically limited in this application.

With reference to FIG. 10, the following describes another technical solution provided in this application.

FIG. 10 is a diagram of another embodiment of a communication method according to embodiments of this application. Refer to FIG. 10. The communication method includes the following steps.

1001: A first access network device sends an RRC release message to a terminal device. Accordingly, the terminal device receives the RRC release message from the first access network device.

The RRC release message is for releasing the terminal device to an RRC inactive state or an RRC idle state. The first access network device is a last serving access network device of the terminal device. For example, the first access network device is a last serving base station of the terminal device.

After the terminal device receives the RRC release message, the terminal device may enter the RRC inactive state or the RRC idle state.

1002: A second access network device sends a paging message to the terminal device, where the paging message includes first indication information. Accordingly, the terminal device receives the paging message from the second access network device.

The first indication information indicates the terminal device to enter a first mode. For the first mode, refer to the foregoing related descriptions. Details are not described herein again.

The second access network device is an access network device on which the terminal device currently camps. The second access network device may page the terminal device. In a paging process, the second access network device indicates, by using the paging message, the terminal device to enter the first mode.

It should be noted that the first access network device and the second access network device may be a same access network device, or may be different access network devices. This is not specifically limited in this application.

If the terminal device does not move, the first access network device and the second access network device are the same access network device. If the terminal device moves, and moves to the second access network device, the first access network device and the second access network device may not be the same access network device.

Optionally, the paging message further includes at least one of the following: waiting duration for the terminal device to enter the first mode, an entry time point or a triggering event for entering the first mode, or an exit time point or a triggering event for the terminal device to exit from the first mode. For the information, refer to the foregoing related descriptions.

1003: The terminal device enters the first mode based on the first indication information.

When the terminal device is in the RRC inactive state or the RRC idle state, the terminal device enters the first mode based on the first indication information. When the terminal device is in the first mode, the terminal device does not perform at least one of the following: The terminal device monitors the paging message; the terminal device searches for at least one of the following: an SSB or a SIB1 message; or the terminal device measures an SSB. When the terminal device is in the first mode, the terminal device may perform at least one of the following: The terminal device sends an SRS; or the terminal device measures a PRS.

For example, in an uplink positioning scenario, the terminal device may send the SRS. The access network device receives the SRS, measures the SRS to obtain a measurement result, and reports the measurement result to a location management device. The location management device may position the terminal device based on the measurement result. When the terminal device is in the RRC inactive state or the RRC idle state, power consumption is lower. In addition, because the terminal device may send the SRS in the first mode, the technical solutions in this application can implement low-power positioning on the terminal device.

For example, in a downlink positioning scenario, the terminal device may receive the PRS, and measure the PRS to obtain a measurement result. Then, the terminal device may send the measurement result to a location management device. The location management device may position the terminal device based on the measurement result. When the terminal device is in the RRC inactive state or the RRC idle state, power consumption is lower. In addition, because the terminal device may measure the PRS in the first mode, the technical solutions in this application can implement low-power positioning on the terminal device.

The foregoing method embodiments may be implemented separately or in combination. For terms and related technologies in embodiments, refer to each other. In other words, technical solutions that do not conflict with each other or that do not logically conflict with each other in different embodiments may be combined with each other. This is not specifically limited in this application.

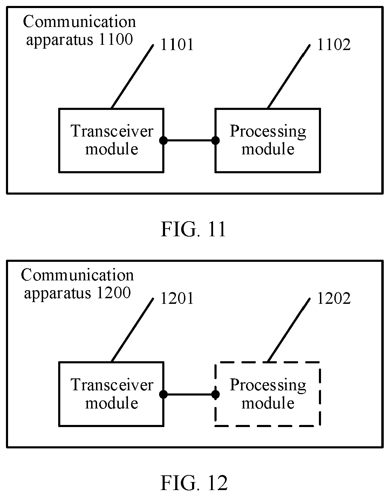

The following describes a communication apparatus provided in this application. FIG. 11 is a diagram of a structure of a communication apparatus 1100 according to an embodiment of this application. The communication apparatus 1100 includes a transceiver module 1101 and a processing module 1102.

When the communication apparatus 1100 includes a terminal device or a chip in the terminal device, the communication apparatus 1100 may be configured to perform all or some of the steps performed by the terminal device in the embodiments shown in FIG. 2 to FIG. 10. For details, refer to the related descriptions in the method embodiments shown in FIG. 2 to FIG. 10.

For example, the transceiver module 1101 is configured to perform step 202 in the embodiment shown in FIG. 2, and the processing module 1102 is configured to perform step 203 in the embodiment shown in FIG. 2. Optionally, the transceiver module 1101 is further configured to perform step 204, step 205, or step 206 and step 207 in the embodiment shown in FIG. 2.

For example, the transceiver module 1101 is configured to perform step 301 and step 303 in the embodiment shown in FIG. 3, and the processing module 1102 is configured to perform step 302 and step 304 in the embodiment shown in FIG. 3.

For example, the transceiver module 1101 is configured to perform step 403 in the embodiment shown in FIG. 4, and the processing module 1102 is configured to perform step 402 and step 404 in the embodiment shown in FIG. 4. Optionally, the transceiver module 1101 is further configured to perform step 401a in the embodiment shown in FIG. 4.

For example, the transceiver module 1101 is configured to perform step 503 in the embodiment shown in FIG. 5, and the processing module 1102 is configured to perform step 502 to step 504 in the embodiment shown in FIG. 5. Optionally, the transceiver module 1101 is further configured to perform step 501b or step 501c in the embodiment shown in FIG. 5.

For example, the transceiver module 1101 is configured to perform step 601 and step 602 in the embodiment shown in FIG. 6, and the processing module 1102 is configured to perform step 603 in the embodiment shown in FIG. 6.

For example, the transceiver module 1101 is configured to perform step 701 and step 702 in the embodiment shown in FIG. 7, and the processing module 1102 is configured to perform step 703 in the embodiment shown in FIG. 7.

For example, the transceiver module 1101 is configured to perform step 801 and step 802 in the embodiment shown in FIG. 8, and the processing module 1102 is configured to perform step 803 in the embodiment shown in FIG. 8.

For example, the transceiver module 1101 is configured to perform step 901 and step 902 in the embodiment shown in FIG. 9, and the processing module 1102 is configured to perform step 903 in the embodiment shown in FIG. 9.

For example, the transceiver module 1101 is configured to perform step 1001 and step 1002 in the embodiment shown in FIG. 10, and the processing module 1102 is configured to perform step 1003 in the embodiment shown in FIG. 10.

When the communication apparatus 1100 includes an access network device or a chip in the access network device, the communication apparatus 1100 may be configured to perform all or some of the steps performed by the access network device in the embodiments shown in FIG. 2 to FIG. 5.

For example, the transceiver module 1101 is configured to perform step 202 in the embodiment shown in FIG. 2, and the processing module 1102 is configured to perform step 201 in the embodiment shown in FIG. 2. Optionally, the transceiver module 1101 is further configured to perform step 206 and step 207 in the embodiment shown in FIG. 2.

For example, the transceiver module 1101 is configured to perform step 301 and step 303 in the embodiment shown in FIG. 3, and the processing module 1102 is configured to perform step 302 in the embodiment shown in FIG. 3. Optionally, the transceiver module 1101 is further configured to perform step 302a and step 302b in the embodiment shown in FIG. 3.

For example, the transceiver module 1101 is configured to perform step 401 and step 403 in the embodiment shown in FIG. 4, and the processing module 1102 is configured to perform step 402 in the embodiment shown in FIG. 4. Optionally, the transceiver module 1101 is further configured to perform step 402a and step 402b in the embodiment shown in FIG. 4.

For example, the transceiver module 1101 is configured to perform step 501 and step 503 in the embodiment shown in FIG. 5, and the processing module 1102 is configured to perform step 502 in the embodiment shown in FIG. 5. Optionally, the transceiver module 1101 is further configured to perform step 502a and step 502b in the embodiment shown in FIG. 5.

The following describes a communication apparatus provided in this application. FIG. 12 is a diagram of a structure of a communication apparatus 1200 according to an embodiment of this application. The communication apparatus 1200 includes a transceiver module 1201. Optionally, the communication apparatus 1200 further includes a processing module 1202.

When the communication apparatus 1200 includes an AMF or a chip in the AMF, the communication apparatus 1000 may be configured to perform all or some of the steps performed by the AMF in the embodiments shown in FIG. 2 to FIG. 5.

For example, the transceiver module 1201 is configured to perform step 206 in the embodiment shown in FIG. 2.

For example, the transceiver module 1201 is configured to perform step 302a in the embodiment shown in FIG. 3.

For example, the transceiver module 1201 is configured to perform step 402a, step 401b, and step 401c in the embodiment shown in FIG. 4.

For example, the transceiver module 1201 is configured to perform step 501 in the embodiment shown in FIG. 5. Optionally, the transceiver module 1201 is further configured to perform step 501a, step 501c, step 502a, and step 502c in the embodiment shown in FIG. 5.

When the communication apparatus 1200 includes a location management device or a chip in the location management device, the communication apparatus 1200 may be configured to perform all or some of the steps performed by the location management device in the embodiments shown in FIG. 2 to FIG. 5.

For example, the transceiver module 1201 is configured to perform step 207 in the embodiment shown in FIG. 2.

For example, the transceiver module 1201 is configured to perform step 302b in the embodiment shown in FIG. 3.

For example, the transceiver module 1201 is configured to perform step 401 in the embodiment shown in FIG. 4. Optionally, the transceiver module 1201 is further configured to perform step 401a, step 401b, step 401c, and step 402b in the embodiment shown in FIG. 4.

For example, the transceiver module 1201 is configured to perform step 501a in the embodiment shown in FIG. 5. Optionally, the transceiver module 1201 is further configured to perform step 501b, step 502b, or step 502c.

When the communication apparatus 1200 includes a network device or a chip in the network device, the communication apparatus 1200 may be configured to perform all or some of the steps performed by the network device in the embodiments shown in FIG. 6 to FIG. 9.

Specifically, the communication apparatus 1200 is configured to perform all or some of the steps performed by the network device in the embodiment shown in FIG. 6, is configured to perform all or some of the steps performed by the AMF in the embodiment shown in FIG. 7, is configured to perform all or some of the steps performed by the location management device in the embodiment shown in FIG. 8, and is configured to perform all or some of the steps performed by the access network device in the embodiment shown in FIG. 9.

For example, the transceiver module 1201 is configured to perform step 601 and step 602 in the embodiment shown in FIG. 6.

For example, the transceiver module 1201 is configured to perform step 701 and step 702 in the embodiment shown in FIG. 7. Optionally, the transceiver module 1201 is further configured to perform step 701a and step 701b in the embodiment shown in FIG. 7.

For example, the transceiver module 1201 is configured to perform step 801 and step 802 in the embodiment shown in FIG. 8. Optionally, the transceiver module 1201 is further configured to perform step 801a, step 801b, and step 802b in the embodiment shown in FIG. 8.

For example, the transceiver module 1201 is configured to perform step 901b in the embodiment shown in FIG. 9.

When the communication apparatus 1200 includes a second access network device or a chip in the second access network device, the communication apparatus 1200 may be configured to perform all or some of the steps performed by the second access network device in the embodiment shown in FIG. 10.

For example, the transceiver module 1201 is configured to perform step 1002 in the embodiment shown in FIG. 10.

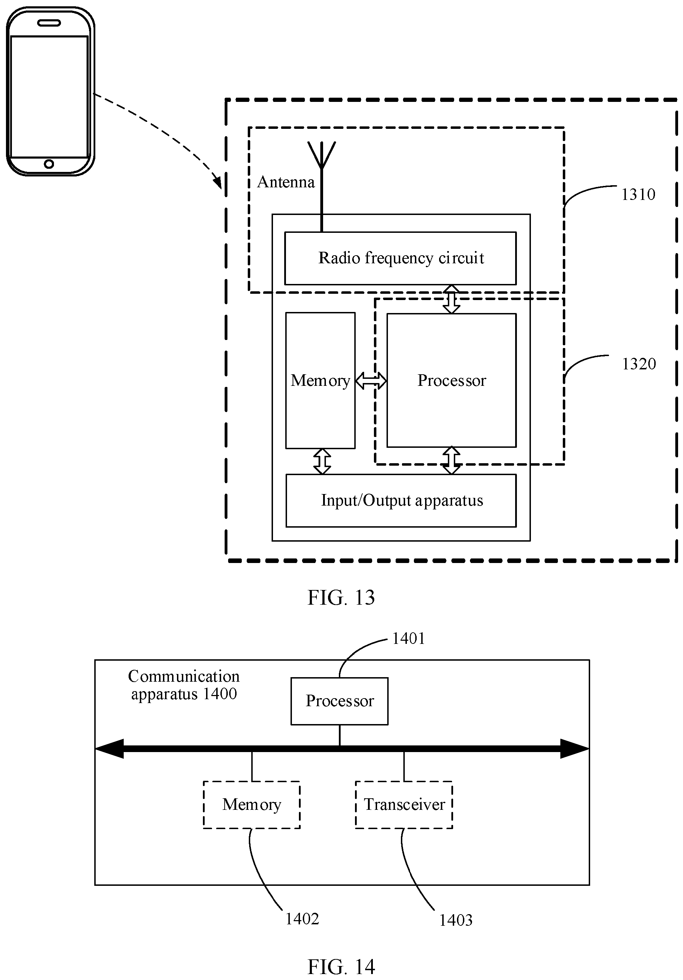

FIG. 13 is a diagram of a possible structure in which a communication apparatus is a terminal device.

FIG. 13 is a simplified diagram of a structure of a terminal device. For ease of understanding and convenience of illustration, in FIG. 13, an example in which the terminal device is a mobile phone is used. As shown in FIG. 13, the terminal device includes a processor, a memory, a radio frequency circuit, an antenna, and an input/output apparatus.

The processor is mainly configured to: process a communication protocol and communication data, control the terminal device, execute a software program, process data of the software program, and the like. The memory is mainly configured to store the software program and the data.

The radio frequency circuit is mainly configured to perform conversion between a baseband signal and a radio frequency signal, and process the radio frequency signal.

The antenna is mainly configured to receive and send a radio frequency signal in a form of an electromagnetic wave.

The input/output apparatus, such as a touchscreen, a display, or a keyboard, is mainly configured to: receive data entered by a user, and output data to the user.

It should be noted that some types of terminal devices may have no input/output apparatus.

When data needs to be sent, the processor performs baseband processing on the to-be-sent data, and outputs a baseband signal to the radio frequency circuit. After performing radio frequency processing on the baseband signal, the radio frequency circuit sends a radio frequency signal in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

For ease of description, FIG. 13 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver unit of the terminal device, and the processor that has a processing function may be considered as a processing unit of the terminal device. As shown in FIG. 13, the terminal device includes a transceiver unit 1310 and a processing unit 1320. The transceiver unit may also be referred to as a transceiver, a transceiver apparatus, or the like. The processing unit may also be referred to as a processor, a processing board, a processing module, a processing apparatus, or the like.

Optionally, a component that is in the transceiver unit 1310 and that is configured to implement a receiving function may be considered as a receiving unit, and a component that is in the transceiver unit 1310 and that is configured to implement a sending function may be considered as a sending unit. That is, the transceiver unit 1310 includes the receiving unit and the sending unit. The transceiver unit may also be sometimes referred to as a transceiver, a transceiver circuit, or the like. The receiving unit may also be sometimes referred to as a receiver, a receiving circuit, or the like. The sending unit may also be sometimes referred to as a transmitter, a transmitting circuit, or the like.

It should be understood that the transceiver unit 1310 is configured to perform a sending operation and a receiving operation of the terminal device in the foregoing method embodiments, and the processing unit 1320 is configured to perform an operation other than the receiving operation and the sending operation of the terminal device in the foregoing method embodiments.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip.

This application further provides a communication apparatus. FIG. 14 is a diagram of another structure of a communication apparatus 1400 according to an embodiment of this application.

The communication apparatus 1400 includes a processor 1401. Optionally, the communication apparatus 1400 further includes a memory 1402 and a transceiver 1403.

The processor 1401, the memory 1402, and the transceiver 1403 are separately connected through a bus, and the memory stores computer instructions.

When the communication apparatus 1400 includes an access network device or a chip in the access network device, the communication apparatus 1400 is configured to perform the steps performed by the access network device in the embodiments shown in FIG. 2 to FIG. 5.

When the communication apparatus 1400 includes an AMF or a chip in the AMF, the communication apparatus 1400 is configured to perform the steps performed by the AMF in the embodiments shown in FIG. 2 to FIG. 5 and FIG. 7 to FIG. 9.

When the communication apparatus 1400 includes a location management device or a chip in the location management device, the communication apparatus 1400 is configured to perform the steps performed by the location management device in the embodiments shown in FIG. 2 to FIG. 5 and FIG. 7 to FIG. 9.

When the communication apparatus 1400 includes a network device or a chip in the network device, the communication apparatus 1400 is configured to perform the steps performed by the network device in the embodiment shown in FIG. 6.

When the communication apparatus 1400 includes a second access network device or a chip in the second access network device, the communication apparatus 1400 is configured to perform the steps performed by the second access network device in the embodiment shown in FIG. 10.

An embodiment of this application further provides a communication system. The communication system includes a terminal device and an access network device. The terminal device is configured to perform all or some of the steps performed by the terminal device in the embodiments shown in FIG. 2 to FIG. 5.

Optionally, the communication system further includes an AMF and a location management device. The AMF is configured to perform all or some of the steps performed by the AMF in the embodiments shown in FIG. 2 to FIG. 5. The location management device is configured to perform all or some of the steps performed by the location management device in the embodiments shown in FIG. 2 to FIG. 5.

An embodiment of this application further provides another communication system. The communication system includes a terminal device and a network device. The terminal device is configured to perform all or some of the steps performed by the terminal device in the embodiments shown in FIG. 6 to FIG. 9. The network device is configured to perform all or some of the steps performed by the network device in the embodiment shown in FIG. 6, is configured to perform all or some of the steps performed by the AMF in the embodiment shown in FIG. 7, is configured to perform all or some of the steps performed by the location management device in the embodiment shown in FIG. 8, and is configured to perform all or some of the steps performed by the access network device in the embodiment shown in FIG. 9.

An embodiment of this application further provides another communication system. The communication system includes a terminal device and a second access network device. The terminal device is configured to perform all or some of the steps performed by the terminal device in the embodiment shown in FIG. 10. The second access network device is configured to perform all or some of the steps performed by the second access network device in the embodiment shown in FIG. 10.

Optionally, the communication system further includes a first access network device. The first access network device is configured to perform all or some of the steps performed by the first access network device in the embodiment shown in FIG. 10.

An embodiment of this application further provides a computer program product including computer instructions. When the computer program product runs on a computer, the computer is enabled to perform the communication methods in the embodiments shown in FIG. 2 to FIG. 10.

An embodiment of this application further provides a computer-readable storage medium, including computer instructions. When the computer instructions are run on a computer, the computer is enabled to perform the communication methods in the embodiments shown in FIG. 2 to FIG. 10.

An embodiment of this application further provides a chip apparatus, including a processor, configured to invoke a computer program or computer instructions stored in a memory, so that the processor performs the communication methods in the embodiments shown in FIG. 2 to FIG. 10.

Optionally, the processor is coupled to the memory through an interface.

Optionally, the chip apparatus further includes the memory, and the memory stores the computer program or the computer instructions.

The processor mentioned anywhere above may be a general-purpose central processing unit, a microprocessor, an application-specific integrated circuit (application-specific integrated circuit, ASIC), or one or more of integrated circuits configured to control program execution of the communication methods in the embodiments shown in FIG. 2 to FIG. 10. The memory mentioned anywhere above may be a read-only memory (read-only memory, ROM), another type of static storage device that can store static information and instructions, a random access memory (random access memory, RAM), or the like.

In addition, it should be noted that the foregoing apparatus embodiments are merely examples. The units described as separate parts may or may not be physically separate, and parts displayed as units may or may not be physical units, that is, may be located in one position, or may be distributed on a plurality of network units. Some or all of the modules may be selected based on actual requirements to achieve the objectives of the solutions in embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by using software in addition to necessary universal hardware, or by using dedicated hardware, including a dedicated integrated circuit, a dedicated CPU, a dedicated memory, a dedicated component, and the like. Generally, all functions that can be performed by a computer program can be easily implemented by using corresponding hardware. Moreover, a specific hardware structure for achieving a same function may be in various forms, for example, in a form of an analog circuit, a digital circuit, or a dedicated circuit. However, for this application, software program implementation is a better implementation in more cases. Based on such an understanding, the technical solutions in this application essentially or the part contributing to the conventional technology may be implemented in a form of a software product. The computer software product is stored in a readable-storage medium, for example, a floppy disk, a USB flash drive, a removable hard disk, a ROM, a RAM, a magnetic disk, or an optical disc of a computer, and includes several instructions for instructing a computer device to perform the methods in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, network device, local computing device, computing device, or data center to another website, computer, network device, local computing device, computing device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a network device, a local computing device, or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

It should be understood that, in various embodiments of this application, sequence numbers of the foregoing processes do not mean an execution sequence. The execution sequence of the processes should be determined based on functions and internal logic of the processes, and should not constitute any limitation on an implementation process of embodiments of this application.

A person of ordinary skill in the art may be aware that, with reference to the units and algorithm steps in the examples described in embodiments disclosed in this specification, this application can be implemented by electronic hardware, computer software, or a combination thereof. To clearly describe interchangeability between the hardware and the software, the foregoing generally describes a composition and steps of each example based on functions. Whether the functions are performed by hardware or software depends on particular applications and design constraint conditions of the technical solutions. A person skilled in the art may use different methods to implement the functions for each particular application, but it should not be considered that the implementation goes beyond the scope of this application.

It may be clearly understood by a person skilled in the art that, for ease and brevity of description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the foregoing apparatus embodiment is merely an example. For example, the division into the units is merely logical function division, and may be other division in actual implementation. For example, a plurality of units or components may be combined, or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application.

In conclusion, the foregoing descriptions are merely example embodiments of the technical solutions in this application, but are not intended to limit the protection scope of this application. The scope of the invention is solely defined by the appended claims.

## Claims

1. A communication method, applied in a terminal device or a chip thereof, wherein the method comprises:
receiving first information (202) from an access network device, wherein the first information is for configuring the terminal device to enter a first mode, and the first information is carried in a radio resource control, RRC, release message or an RRC reconfiguration message; and
entering the first mode (203) based on the first information, wherein
when the terminal device is in the first mode, the terminal device does not perform at least one of the following:
monitoring a paging message;
searching for at least one of the following: a synchronization signal block, SSB, or a system information block 1, SIB1, message; or
measuring an SSB; and
when the terminal device is in the first mode, the terminal device performs at least one of the following:
sending a sounding reference signal, SRS; or
measuring a positioning reference signal, PRS.

2. The method according to claim 1, wherein the first information is for configuring the terminal device to enter the first mode when the terminal device is in a radio resource control RRC inactive state, and the entering the first mode based on the first information comprises: entering the first mode when the terminal device is in the RRC inactive state;
or
the first information is for configuring the terminal device to enter the first mode when the terminal device is in an RRC idle state, and the entering the first mode based on the first information comprises: entering the first mode when the terminal device is in the RRC idle state.

3. The method according to claim 1 or 2, wherein the first information comprises at least one of the following: first indication information, waiting duration for the terminal device to enter the first mode, an entry time point or a triggering event for entering the first mode, or an exit time point or a triggering event for the terminal device to exit from the first mode, wherein the first indication information indicates the terminal device to enter the first mode.

4. The method according to any one of claims 1 to 3, wherein the method further comprises:
sending a first request or capability information to the access network device, an access and mobility management function, AMF, or a location management device, wherein
the first request is for requesting to configure the terminal device to enter the first mode, and the capability information comprises information indicating that the terminal device supports the first mode.

5. A communication method, applied in an access network device or a chip thereof, wherein the method comprises:
determining (201) first information, wherein the first information is for configuring a terminal device to enter a first mode; and
sending the first information (202) to the terminal device, wherein the first information is carried in a radio resource control, RRC, release message or an RRC reconfiguration message, wherein
when the terminal device is in the first mode, the terminal device does not perform at least one of the following:
monitoring a paging message;
searching for at least one of the following: a synchronization signal block SSB or a system information block 1, SIB1, message; or
measuring an SSB; and
when the terminal device is in the first mode, the terminal device performs at least one of the following:
sending a sounding reference signal, SRS; or
measuring a positioning reference signal, PRS.

6. The method according to claim 5, wherein
the first information is for configuring the terminal device to enter the first mode in an RRC inactive state; or
the first information is for configuring the terminal device to enter the first mode in an RRC idle state.

7. The method according to claim 6, wherein the first information comprises at least one of the following: first indication information, waiting duration, an entry time point, or a triggering event for the terminal device to enter the first mode, or an exit time point or a triggering event for the terminal device to exit from the first mode, wherein the first indication information indicates the terminal device to enter the first mode.

8. The method according to any one of claims 5 to 7, wherein the method further comprises:
receiving a first request or capability information from the terminal device, wherein
the first request is for requesting to configure the terminal device to enter the first mode, and the capability information comprises information indicating that the terminal device supports the first mode.

9. The method according to claim 8, wherein the method further comprises:
sending a first notification to an access and mobility management function, AMF, wherein the first notification is for notifying the AMF that the terminal device is to enter the first mode; and/or
sending a second notification to a location management device, wherein the second notification is for notifying the location management device that the terminal device is to enter the first mode.

10. The method according to any one of claims 5 to 7, wherein the method further comprises:
receiving third information from an access and mobility management function, AMF or a location management device, wherein
the third information comprises a first request or capability information, wherein the first request is for requesting to configure the terminal device to enter the first mode, and the capability information comprises information indicating that the terminal device supports the first mode.

11. The method according to claim 10, wherein the third information further comprises at least one of the following: waiting duration, an entry time point, or a triggering event for the terminal device to enter the first mode, or an exit time point or a triggering event for the terminal device to exit from the first mode.

12. The method according to claim 10 or 11, wherein the method further comprises:
sending a first response to the AMF, wherein the first response is for confirming that the terminal device is to enter the first mode; and/or
sending a second response to the location management device, wherein the second response is for confirming that the terminal device is to enter the first mode.

13. A communication apparatus, wherein the communication apparatus comprises a processor, and the processor is configured to execute a computer program or computer instructions in a memory, to perform the method according to any one of claims 1 to 4 or the method according to any one of claims 5 to 12.

14. A computer-readable storage medium, wherein the computer-readable storage medium stores a computer program; and when the computer program is executed by a communication apparatus, the communication apparatus is enabled to perform the method according to any one of claims 1 to 4, or the communication apparatus is enabled to perform the method according to any one of claims 5 to 12.

15. A computer program, wherein when the computer program is executed by a communication apparatus, the communication apparatus is enabled to perform the method according to any one of claims 1 to 4, or the communication apparatus is enabled to perform the method according to any one of claims 5 to 12.

## Patentansprüche

1. Kommunikationsverfahren, das in einer Endgerätevorrichtung oder einem Chip derselben angewandt wird, wobei das Verfahren umfasst:
Empfangen von ersten Informationen (202) von einer Zugangsnetzwerkvorrichtung, wobei die ersten Informationen geeignet sind zum Konfigurieren der Endgerätevorrichtung, um in einen ersten Modus einzutreten, und die ersten Informationen in einer Freigabenachricht für eine Funkressourcensteuerung, RRC-Freigabenachricht, oder einer RRC-Neukonfigurationsnachricht transportiert werden; und
Eintreten in den ersten Modus (203) basierend auf den ersten Informationen, wobei,
wenn sich die Endgerätevorrichtung in dem ersten Modus befindet, die Endgerätevorrichtung mindestens eines der Folgenden nicht durchführt:
Überwachen einer Paging-Nachricht;
Suchen nach mindestens einer der Folgenden: einer Synchronisationssignalblock-Nachricht, SSB-Nachricht, oder einer Systeminformationsblock-1-Nachricht, SIB1-Nachricht; oder
Messen eines SSB; und
wobei, wenn sich die Endgerätevorrichtung in dem ersten Modus befindet, die Endgerätevorrichtung mindestens eines der Folgenden durchführt:
Senden eines Sondierungsreferenzsignals, SRS; oder
Messen eines Positionierungsreferenzsignals, PRS.

2. Verfahren nach Anspruch 1, wobei die ersten Informationen geeignet sind zum Konfigurieren der Endgerätevorrichtung, um in den ersten Modus einzutreten, wenn sich die Endgerätevorrichtung in einem inaktiven Zustand der Funkressourcensteuerung, inaktiven RRC-Zustand, befindet, und das Eintreten in den ersten Modus basierend auf den ersten Informationen umfasst: Eintreten in den ersten Modus, wenn sich die Endgerätevorrichtung in dem inaktiven RRC-Zustand befindet;
oder
wobei die ersten Informationen geeignet sind zum Konfigurieren der Endgerätevorrichtung, um in den ersten Modus einzutreten, wenn sich die Endgerätevorrichtung in einem RRC-Ruhezustand befindet, und wobei das Eintreten in den ersten Modus basierend auf den ersten Informationen umfasst: Eintreten in den ersten Modus, wenn sich die Endgerätevorrichtung in dem RRC-Ruhezustand befindet.

3. Verfahren nach Anspruch 1 oder 2, wobei die ersten Informationen mindestens eines der Folgenden umfassen: erste Anzeigeinformationen, eine Wartezeit für die Endgerätevorrichtung, um in den ersten Modus einzutreten, einen Eintrittszeitpunkt oder ein Auslöseereignis zum Eintreten in den ersten Modus oder einen Austrittszeitpunkt oder ein Auslöseereignis für die Endgerätevorrichtung, um den ersten Modus zu verlassen, wobei die ersten Anzeigeinformationen die Endgerätevorrichtung anweisen, in den ersten Modus einzutreten.

4. Verfahren nach einem der Ansprüche 1 bis 3, wobei das Verfahren ferner umfasst:
Senden einer ersten Anfrage oder von Leistungsfähigkeitsinformationen an die Zugangsnetzwerkvorrichtung, an eine Zugriffs- und Mobilitätsverwaltungsfunktion, AMF, oder an eine Standortverwaltungsvorrichtung, wobei
die erste Anfrage geeignet ist, um anzufordern, dass die Endgerätevorrichtung konfiguriert wird, um in den ersten Modus einzutreten, und die Leistungsfähigkeitsinformationen Informationen umfassen, die anzeigen, dass die Endgerätevorrichtung den ersten Modus unterstützt.

5. Kommunikationsverfahren, das in einer Zugangsnetzwerkvorrichtung oder einem Chip derselben angewandt wird, wobei das Verfahren umfasst:
Ermitteln (201) von ersten Informationen, wobei die ersten Informationen geeignet sind zum Konfigurieren einer Endgerätevorrichtung, um in einen ersten Modus einzutreten; und
Senden der ersten Informationen (202) an die Endgerätevorrichtung, wobei die ersten Informationen in einer Freigabenachricht für eine Funkressourcensteuerung, RRC-Freigabenachricht oder einer RRC-Neukonfigurationsnachricht transportiert werden, wobei,
wenn sich die Endgerätevorrichtung in dem ersten Modus befindet, die Endgerätevorrichtung mindestens eines der Folgenden nicht durchführt:
Überwachen einer Paging-Nachricht;
Suchen nach mindestens einer der Folgenden: einer Synchronisationssignalblock-Nachricht, SSB-Nachricht, oder einer Systeminformationsblock-1-Nachricht, SIB1-Nachricht; oder
Messen eines SSB; und
wobei, wenn sich die Endgerätevorrichtung in dem ersten Modus befindet, die Endgerätevorrichtung mindestens eines der Folgenden durchführt:
Senden eines Sondierungsreferenzsignals, SRS; oder
Messen eines Positionierungsreferenzsignals, PRS.

6. Verfahren nach Anspruch 5, wobei
die ersten Informationen geeignet sind zum Konfigurieren der Endgerätevorrichtung, um in einem inaktiven RRC-Zustand in den ersten Modus einzutreten; oder
die ersten Informationen geeignet sind zum Konfigurieren der Endgerätevorrichtung, um in einem RRC-Ruhezustand in den ersten Modus einzutreten.

7. Verfahren nach Anspruch 6, wobei die ersten Informationen mindestens eines der Folgenden umfassen: erste Anzeigeinformationen, eine Wartezeit, einen Eintrittszeitpunkt oder ein Auslöseereignis für die Endgerätevorrichtung, um in den ersten Modus einzutreten, oder einen Austrittszeitpunkt oder ein Auslöseereignis für die Endgerätevorrichtung, um den ersten Modus zu verlassen, wobei die ersten Anzeigeinformationen die Endgerätevorrichtung anweisen, in den ersten Modus einzutreten.

8. Verfahren nach einem der Ansprüche 5 bis 7, wobei das Verfahren ferner umfasst:
Empfangen einer ersten Anforderung oder von Leistungsfähigkeitsinformationen von der Endgerätevorrichtung, wobei
die erste Anfrage geeignet ist, um anzufordern, dass die Endgerätevorrichtung konfiguriert wird, um in den ersten Modus einzutreten, und die Leistungsfähigkeitsinformationen Informationen umfassen, die anzeigen, dass die Endgerätevorrichtung den ersten Modus unterstützt.

9. Verfahren nach Anspruch 8, wobei das Verfahren ferner umfasst:
Senden einer ersten Benachrichtigung an eine Zugriffs- und Mobilitätsverwaltungsfunktion, AMF, wobei die erste Benachrichtigung geeignet ist zum Benachrichtigen der AMF, dass die Endgerätevorrichtung geeignet ist, um in den ersten Modus einzutreten; und/oder
Senden einer zweiten Benachrichtigung an eine Standortverwaltungsvorrichtung, wobei die zweite Benachrichtigung geeignet ist zum Benachrichtigen der Standortverwaltungsvorrichtung, dass die Endgerätevorrichtung geeignet ist, um in den ersten Modus einzutreten.

10. Verfahren nach einem der Ansprüche 5 bis 7, wobei das Verfahren ferner umfasst: Empfangen von dritten Informationen von einer Zugriffs- und Mobilitätsverwaltungsfunktion, AMF oder von einer Standortverwaltungsvorrichtung, wobei
die dritten Informationen eine erste Anfrage oder Leistungsfähigkeitsinformationen umfassen, wobei die erste Anfrage geeignet ist, um anzufordern, dass die Endgerätevorrichtung konfiguriert wird, um in den ersten Modus einzutreten, und die Leistungsfähigkeitsinformationen Informationen umfassen, die anzeigen, dass die Endgerätevorrichtung den ersten Modus unterstützt.

11. Verfahren nach Anspruch 10, wobei die dritten Informationen mindestens eines der Folgenden umfassen: eine Wartezeit, einen Eintrittszeitpunkt oder ein Auslöseereignis für die Endgerätevorrichtung, um in den ersten Modus einzutreten, oder einen Austrittszeitpunkt oder ein Auslöseereignis für die Endgerätevorrichtung, um den ersten Modus zu verlassen.

12. Verfahren nach Anspruch 10 oder 11, wobei das Verfahren ferner umfasst:
Senden einer ersten Antwort an die AMF, wobei die erste Antwort geeignet ist zum Bestätigen, dass die Endgerätevorrichtung geeignet ist, um in den ersten Modus einzutreten; und/oder
Senden einer zweiten Antwort an die Standortverwaltungsvorrichtung, wobei die zweite Antwort geeignet ist zum Bestätigen, dass die Endgerätevorrichtung geeignet ist, um in den ersten Modus einzutreten.

13. Kommunikationseinrichtung, wobei die Kommunikationseinrichtung einen Prozessor umfasst und der Prozessor konfiguriert ist zum Ausführen eines Computerprogramms oder von Computeranweisungen in einem Speicher, um das Verfahren nach einem der Ansprüche 1 bis 4 oder das Verfahren nach einem der Ansprüche 5 bis 12 durchzuführen.

14. Computerlesbares Speichermedium, wobei in dem computerlesbaren Speichermedium ein Computerprogramm gespeichert ist; und, wenn das Computerprogramm von einer Kommunikationseinrichtung ausgeführt wird, die Kommunikationseinrichtung aktiviert wird, um das Verfahren nach einem der Ansprüche 1 bis 4 durchzuführen, oder die Kommunikationseinrichtung aktiviert wird, um das Verfahren nach einem der Ansprüche 5 bis 12 durchzuführen.

15. Computerprogramm, wobei, wenn das Computerprogramm von einer Kommunikationseinrichtung ausgeführt wird, die Kommunikationseinrichtung aktiviert wird, um das Verfahren nach einem der Ansprüche 1 bis 4 durchzuführen, oder die Kommunikationseinrichtung aktiviert wird, um das Verfahren nach einem der Ansprüche 5 bis 12 durchzuführen.

## Revendications

1. Procédé de communication, appliqué dans un dispositif terminal ou une puce de celui-ci, le procédé comprenant :
la réception de premières informations (202) en provenance d'un dispositif de réseau d'accès, les premières informations étant destinées à configurer le dispositif terminal pour entrer dans un premier mode, et les premières informations étant transportées dans un message de libération de commande de ressource radio, RRC, ou un message de reconfiguration de RRC ; et
l'entrée dans le premier mode (203) sur la base des premières informations,
lorsque le dispositif terminal se trouve dans le premier mode, le dispositif terminal n'effectuant pas au moins une action parmi :
la surveillance d'un message de radiomessagerie ;
la recherche d'au moins l'un parmi : un bloc de signal de synchronisation, SSB, ou un message de bloc d'informations système 1, SIB1 ; ou
la mesure d'un SSB ; et
lorsque le dispositif terminal est dans le premier mode, le dispositif terminal effectuant au moins une action parmi :
l'envoi d'un signal de référence sonore, SRS ; ou
la mesure d'un signal de référence de positionnement, PRS.

2. Procédé selon la revendication 1, les premières informations étant destinées à configurer le dispositif terminal pour entrer dans le premier mode lorsque le dispositif terminal est dans un état inactif RRC de commande de ressource radio, et l'entrée dans le premier mode sur la base des premières informations comprenant : l'entrée dans le premier mode lorsque le dispositif terminal est dans l'état inactif RRC ;
ou
les premières informations étant destinées à configurer le dispositif terminal pour entrer dans le premier mode lorsque le dispositif terminal est dans un état de repos RRC, et l'entrée dans le premier mode sur la base des premières informations comprenant : l'entrée dans le premier mode lorsque le dispositif terminal est dans l'état de repos RRC.

3. Procédé selon la revendication 1 ou 2, les premières informations comprenant au moins l'une des suivantes : des premières informations d'indication, une durée d'attente pour que le dispositif terminal entre dans le premier mode, un point temporel d'entrée ou un événement déclencheur pour entrer dans le premier mode, ou un point temporel de sortie ou un événement déclencheur pour que le dispositif terminal quitte le premier mode, les premières informations d'indication indiquant que le dispositif terminal entre dans le premier mode.

4. Procédé selon l'une quelconque des revendications 1 à 3, le procédé comprenant en outre :
l'envoi d'une première demande ou d'informations de capacité au dispositif de réseau d'accès, à une fonction de gestion d'accès et de mobilité, AMF, ou à un dispositif de gestion de localisation,
la première demande étant destinée à demander de configurer le dispositif terminal pour entrer dans le premier mode, et les informations de capacité comprenant des informations indiquant que le dispositif terminal prend en charge le premier mode.

5. Procédé de communication, appliqué dans un dispositif de réseau d'accès ou une puce de celui-ci, le procédé comprenant :
la détermination (201) de premières informations, les premières informations étant destinées à configurer un dispositif terminal pour entrer dans un premier mode ; et
l'envoi des premières informations (202) au dispositif terminal, les premières informations étant transportées dans un message de libération de commande de ressource radio, RRC, ou un message de reconfiguration de RRC,
lorsque le dispositif terminal se trouve dans le premier mode, le dispositif terminal n'effectuant pas au moins une action parmi :
la surveillance d'un message de radiomessagerie ;
la recherche d'au moins l'un parmi : un bloc de signal de synchronisation SSB ou un message de bloc d'informations système 1, SIB1 ; ou
la mesure d'un SSB ; et
lorsque le dispositif terminal est dans le premier mode, le dispositif terminal effectuant au moins une action parmi :
l'envoi d'un signal de référence sonore, SRS ; ou
la mesure d'un signal de référence de positionnement, PRS.

6. Procédé selon la revendication 5,
les premières informations étant destinées à configurer le dispositif terminal pour entrer dans le premier mode dans un état inactif RRC ; ou
les premières informations étant destinées à configurer le dispositif terminal pour entrer dans le premier mode dans un état de repos RRC.

7. Procédé selon la revendication 6, les premières informations comprenant au moins l'une des suivantes : des premières informations d'indication, une durée d'attente, un point temporel d'entrée, ou un événement déclencheur pour que le dispositif terminal entre dans le premier mode, ou un point temporel de sortie ou un événement déclencheur pour que le dispositif terminal quitte le premier mode, les premières informations d'indication indiquant que le dispositif terminal entre dans le premier mode.

8. Procédé selon l'une quelconque des revendications 5 à 7, le procédé comprenant en outre :
la réception d'une première demande ou d'informations de capacité en provenance du dispositif terminal,
la première demande étant destinée à demander de configurer le dispositif terminal pour entrer dans le premier mode, et les informations de capacité comprenant des informations indiquant que le dispositif terminal prend en charge le premier mode.

9. Procédé selon la revendication 8, le procédé comprenant en outre :
l'envoi d'une première notification à une fonction de gestion d'accès et de mobilité, AMF, la première notification étant destinée à notifier l'AMF que le dispositif terminal doit entrer dans le premier mode ; et/ou
l'envoi d'une seconde notification à un dispositif de gestion de localisation, la seconde notification étant destinée à notifier au dispositif de gestion de localisation que le dispositif terminal doit entrer dans le premier mode.

10. Procédé selon l'une quelconque des revendications 5 à 7, le procédé comprenant en outre : la réception de troisièmes informations à partir d'une fonction de gestion d'accès et de mobilité, AMF ou d'un dispositif de gestion de localisation,
les troisièmes informations comprenant une première demande ou des informations de capacité, la première demande étant destinée à demander de configurer le dispositif terminal pour entrer dans le premier mode, et les informations de capacité comprenant des informations indiquant que le dispositif terminal prend en charge le premier mode.

11. Procédé selon la revendication 10, les troisièmes informations comprenant en outre au moins l'un des éléments suivants : une durée d'attente, un point temporel d'entrée, ou un événement déclencheur pour que le dispositif terminal entre dans le premier mode, ou un point temporel de sortie ou un événement déclencheur pour que le dispositif terminal quitte le premier mode.

12. Procédé selon la revendication 10 ou 11, le procédé comprenant en outre :
l'envoi d'une première réponse à l'AMF, la première réponse étant destinée à confirmer que le dispositif terminal doit entrer dans le premier mode ; et/ou
l'envoi d'une seconde réponse au dispositif de gestion de localisation, la seconde réponse étant destinée à confirmer que le dispositif terminal doit entrer dans le premier mode.

13. Appareil de communication, l'appareil de communication comprenant un processeur, et le processeur étant configuré pour exécuter un programme informatique ou des instructions informatique dans une mémoire, pour mettre en œuvre le procédé selon l'une quelconque des revendications 1 à 4 ou le procédé selon l'une quelconque des revendications 5 à 12.

14. Support de stockage lisible par ordinateur, le support de stockage lisible par ordinateur stockant un programme informatique ; et lorsque le programme informatique est exécuté par un appareil de communication, l'appareil de communication étant autorisé à réaliser le procédé selon l'une quelconque des revendications 1 à 4, ou l'appareil de communication étant autorisé à réaliser le procédé selon l'une quelconque des revendications 5 à 12.

15. Programme informatique, lorsque le programme informatique est exécuté par un appareil de communication, l'appareil de communication étant autorisé à réaliser le procédé selon l'une quelconque des revendications 1 à 4, ou l'appareil de communication étant autorisé à réaliser le procédé selon l'une quelconque des revendications 5 à 12.
